# EUROPÄISCHE PATENTSCHRIFT

(11) **EP 2 869 040 B1**
(45) Veröffentlichungstag und Bekanntmachung des Hinweises auf die Patenterteilung: **12.10.2016**
(21) Anmeldenummer: 14190553.9
(22) Anmeldetag: 28.08.2012
(51) Int. Cl.: G01F 1/684, G01F 1/688, G01N 25/56

(54) **Strömungssensor zur Bestimmung eines Strömungsparameters und Verfahren zur Bestimmung desselben**
Flow sensor for monitoring a flow parameter and method of determining the same
Capteur de flux destiné à la détermination d'un paramètre d'écoulement et son procédé de détermination

(30) Priorität: 31.08.2011 DE 102011081922
(43) Veröffentlichungstag der Anmeldung: 06.05.2015
(62) Teilanmeldung aus: 12759396.0
(73) Patentinhaber: Hahn-Schickard-Gesellschaft für angewandte Forschung e.V., 78052 Villingen-Schwenningen (DE)
(72) Erfinder: Hedrich, Frank, 78052 Villingen-Schwenningen (DE); Billat, Sophie, 78052 Villingen-Schwenningen (DE); Storz, Matthias, 78647 Trossingen (DE); Kattinger, Gerhard, 78112 St. Georgen (DE); Ashauer, Matthias, 78089 Unterkirnach (DE)
(74) Vertreter: Burger, Markus

(56) Entgegenhaltungen:
- EP-A1- 1 477 781
- EP-A1- 1 705 463
- WO-A1-01/18500
- WO-A1-2005/029007
- DE-A1-102005 057 687
- JP-A- 4 369 480
- JP-A- 2000 304 584
- JP-A- 2003 240 617
- JP-A- 2007 322 320
- NGUYEN N-T ET AL: "MIKROMECHANISCHE STROEMUNGSSENSOREN IM UEBERBLICK. ÖMICROMECHANICAL MASS FLOW SENSORS: A REVIEW", F & M FEINWERKTECHNIK MIKROTECHNIK MIKROELEKTRONIK, HANSER, MUNCHEN, DE, Bd. 104, Nr. 9, 1. September 1996 (1996-09-01), Seiten 644-648, XP000636590, ISSN: 1437-9503

## Beschreibung

### Erfindungsgebiet

Die vorliegende Erfindung betrifft einen Strömungssensor zur Bestimmung eines Strömungsparameters eines Fluides, zum Beispiel einen thermischen Strömungssensor zur Bestimmung einer Strömungsmenge, einer Strömungsrichtung oder einer Fluidzustandsgröße, sowie ein Verfahren zur Bestimmung eines Strömungsparameters und ein Strömungsmesssystem, das ausgebildet ist, einen Strömungsparameter eines Fluides zu bestimmen.

### Hintergrund der Erfindung

Strömungs- bzw. Durchflusssensoren zur Bestimmung eines Strömungsparameters, wie zum Beispiel eines Massendurchflusses, eines Volumendurchflusses, einer Strömungsgeschwindigkeit eines Fluides sind in vielfältigen Ausführungsformen und mit unterschiedlichen Messprinzipien aus dem Stand der Technik bekannt. Das Fluid kann ein Gas oder eine Flüssigkeit sein. Das Gas oder die Flüssigkeit können mehrere unterschiedliche Bestandteile bzw. Stoffe aufweisen. Luft kann beispielsweise solch ein Gas bzw. Fluid sein, welches Wasserdampf enthält.

Strömungsmesser werden in vielfältigen technischen Gebieten, wie zum Beispiel der Luft-und Raumfahrt, der Fahrzeug- und Motorsteuerung, der Heiz- und Lüftungstechnik, der Medizintechnik sowie in der industriellen Prozesstechnik eingesetzt. Wird beispielsweise Luft als Fluid betrachtet, so spricht man bei solch einem Strömungssensor häufig auch von einem Anemometer, einem Kaloriemeter, einem Luftmassenmesser oder auch von einem Luft - Volumenstromsensor oder Luft-Massenstromsensor.

Ein Strömungssensor kann beispielsweise als Induktionsdurchflussmesser, Ultraschalldurchflussmesser, Coriolis Massenstrommesser, thermischer Strömungssensors oder auch als Wirbelzähler ausgebildet sein.

In der europäischen Patentanmeldung EP 1 512 948 A1 wird ein Gasdurchflusssensor mit Strömungsdiagnostik beschrieben. Das Gas wird dabei über ein miniaturisiertes thermisches CMOS-Anemometer geführt und ein Durchflusssignal gemessen. Dabei werden relativ hochfrequente Schwankungen des Durchflusssignals des CMOS-Anemometers um ein mittleres Durchflusssignal gemessen, und es werden Pulsationen in der Gasströmung aus dem Schwankungssignal bestimmt und angezeigt.

Die Offenlegungsschrift DE 10 324 292 A1 offenbart ein Messelement für einen Durchflusssensor, insbesondere einen Luftmassensensor für Brennkraftmaschinen. Es wird ein Messelement für einen Durchflusssensor vorgeschlagen, so dass die Abmessungen des Messelements verringert werden können.

Aus der WO 01/18500 A1 ist ein Verfahren und eine Vorrichtung zur Präzisionsmassenflussmessung bekannt. Es werden ein Verfahren und ein Sensor zur verbesserten Massenflussmessung offenbart, wobei in bekannten thermischen Massenflusssensoren ein Gasstrom mit einem Heizelement gewärmt wird und aus der Temperaturdifferenz zweier Thermoelemente der Massenfluss bestimmt wird. Zusätzlich wird zumindest eine stoffspezifische Kenngröße zur Charakterisierung des Wänneübergangverhaltens des Gases gemessen und damit die Massenflussmenge korrigiert. Dazu wird ein spezieller Sensor zur Messung der stoffspezifschen Kenngrößen angegeben, der ähnlich wie der Massenflusssensor aufgebaut ist, aber in einem Staurohr einem strömungsfreien Anteil des Mediums ausgesetzt wird.

Die Offenlegungsschrift EP 1 477 781 A1 offenbart einen Massenflussmesser mit einem Sensorchip mit einem zwischen zwei Thermoelementübergängen angeordneten Heizelement.

Die Druckschrift von Nam-Trung Nguyen und Wolfram Dötzel "Mikromechanische Strömungssensoren im Überblick", F & M Feinwerktechnick Mikrotechnik Mikroelektronik, Carl Hanser Verlag, München,Bd. 104, Nr. 9,1. September 1996, zeigt eine in der CMOS Standarttechnologie hergestellte Sensoranordnung.

Die Offenlegungsschrift EP 1 705 463 A1 beschreibt einen Sensor zur Messung eines Fluid-Flusses und eines Flüssigkeitsstandes.

Strömungsmesser werden auch in der Medizintechnik eingesetzt, so wird beispielsweise in sogenannten Spirometern eine Atemgasmessung, d.h. die zeitlich aufgelöste Messung des Volumenstroms beim Ein- und Ausatmen bestimmt. Solch eine Atemgasmessung mit zeitlicher Auflösung des Volumenstroms beim Ein- und Ausatmen kann beispielsweise mit thermischen Strömungssensoren, insbesondere mit mikrotechnischen Membransensoren, bei denen sich die wesentlichen Elemente wie Heizer und Temperatursensoren auf einer dünnen Membran befinden, durchgeführt werden. Allgemein haben thermische Strömungssensoren den Vorteil, dass sie eine hohe Messempfindlichkeit bei geringer Strömungsgeschwindigkeit eines Fluides aufweisen. Im Falle der Atemgasmessung ist eine hohe Messempfindlichkeit bei geringer Strömungsgeschwindigkeit im für die künstliche Beatmung wichtigen Umkehrpunkt zwischen Exspiration (Ausatmen) und Inspiration (Einatmen) wichtig. Gleichzeitig ist eine hohe Messdynamik wünschenswert, um auch hohe Strömungsspitzen zu erkennen bzw. zu messen.

Ferner sind sogenannte Kammerkopf-Sensoren bekannt, die sich prinzipiell auch zur Strömungsmessung, beispielsweise in der Beatmungstechnik, eignen würden. Bei diesen Sensoren befindet sich der Sensorchip in einem kleinen Strömungskanal, der an der Spitze einer Sonde integriert ist. Zum Messen wird die Sonde bzw. deren Spitze in die Gasströmung, d.h. zum Beispiel eine Rohrleitung platziert, so dass ein definierter Teil der Strömung durch den kleinen Strömungskanal fließt und dort gemessen wird. Bei dieser Anordnung ist der Sensorchip jedoch nicht freistehend, was zu Problemen bezüglich einer möglichen Kondensation von Wasser an der Sonde führen kann, da der Sensorchip in der Sonde integriert ist. Diese Anordnung kann auch als Rohr in Rohr-Bypass bezeichnet werden.

Bei der Atemgasmessung bzw. allgemein bei einer zuverlässigen Messung eines Strömungsparameters eines Fluides, wie z. B. einer Volumenstrommessung mit einem thermischen Sensor, besteht eine technische Herausforderung darin, dass ein Exspirationsgas beispielsweise zu 100% mit Wasser gesättigt sein kann. Dadurch kann unter bestimmten widrigen Betriebsbedingungen Betauung und erhöhte Aerosolbildung auf den Sensor eintreten, da sich die Temperatur von Schläuchen und der Messeinrichtung unter der Taupunkttemperatur von Wasser befinden können. Dadurch kann es zu einer Wasseransammlung in Form von Tropfen auf dem Strömungssensor kommen. Insbesondere kann es dann bei einer Sensormembran des Sensors zu einer nicht kompensierbaren Beeinflussung des Sensorsignals und damit möglicherweise zu falschen Messwerten kommen. Im Extremfall kann es zu einem völligen Signaleinbruch kommen.

Da eine Arbeitstemperatur von mikrotechnischem siliziumbasierten Sensoren im Gegensatz zu Dünnschichtsensoren unter 100°C liegen kann, bleiben Wasseransammlungen auf dem Sensor in der Regel stabil und verdampfen nicht. Die Heizenergie, die während des Sensorbetriebes von einem Heizelement abgegeben wird, reicht nicht aus, um einen Wassertropfen in angemessener Zeit zu entfernen bzw. wegzuheizen, d.h. zu verdampfen. Eine Verdunstung kann aufgrund der maximalen Luftfeuchtigkeit während der Exspiration nur während der Inspiration stattfinden. Da ein Sensorausfall bei der Beatmung systemkritisch sein kann, darf eine fehlerhafte Messung aufgrund von Kondensatansammlungen, wie z.B. Wasser auf dem Sensorchip nur selten und dann auch nur für kurze Zeit, von z.B. weniger als 5s, 10s oder 15s, auftreten.

Aufgabe der vorliegenden Erfindung ist es nun, einen Strömungssensor zur Bestimmung eines Strömungsparameters eines Fluides bereitzustellen, d.h. so zu gestalten und zu betreiben, um eine zuverlässige und genaue Strömungsparameterbestimmung in einem großen Messbereich zu ermöglichen. Diese Aufgabe wird durch den Strömungsmesser nach Patentanspruch 1, durch das Verfahren nach Patentanspruch 13 sowie das Strömungsmesssystem nach Patentanspruch 17 gelöst. Weitere vorteilhafte Ausführungsformen der Erfindung ergeben sich aus den abhängigen Patentansprüchen 2 bis 12, 14 bis 16 und 18 bis 19.

In Ausführungsbeispielen der vorliegenden Erfindung wird ein Strömungsmesser zur Bestimmung eines Strömungsparameters eines Fluides beschrieben mit einem Sensorchip, der ein thermisches Membransensorelement aufweist, und wobei der Sensorchip ausgebildet ist, um beim Betrieb des Strömungsmesssensors freistehend als "Nacktchip" von dem Fluid umströmt zu werden. Der Strömungsmesser kann dabei freistehend in einem Hauptstrom des Fluides angeordnet sein.

Gemäß einem weiteren Aspekt der vorliegenden Erfindung weist ein Sensorchip zwei thermische Membransensorelemente auf, die ausgebildet sind, um einen Strömungsparameter des Fluides zu bestimmen, wobei der Strömungsparameter des Fluides mit Hilfe der zwei unterschiedlichen Sensoren in unterschiedlichen Messbereichen bestimmt werden kann und damit eine größere Messbereichsdynamik erzielt werden kann. Außerdem kann zudem abwechselnd eine Fluidtemperatur des den Sensorchip umströmenden Fluides oder der Strömungsparameter bestimmt werden.

Gemäß weiterer Ausführungsbeispiele kann der Strömungssensor einen Sensorchip mit einem integrierten Kondensatheizer aufweisen, der eine Kondensation eines in einem gasförmigen Fluid vorhandenen kondensierbaren Stoffes, wie z.B. Wasser in Luft verhindern oder bei bereits erfolgter Kondensation wieder verdampfen kann.

Gemäß einem weiteren Aspekt der vorliegenden Erfindung wird in einem Verfahren zur Bestimmung eines Strömungsparameters eines Fluides ein Messkopf mit einem einseitig befestigten Sensorchip mit mindestens einem thermischen Membransensorclement freistehend, d.h. als "Nacktchip" während der Messung des Strömungsparameters in dem strömemden Fluid verwendet.

Bevorzugte Ausführungsbeispiele der vorliegenden Erfindung werden nachfolgend Bezug nehmend auf die beiliegenden Zeichnungen näher erläutert. Es zeigen:
- Fig. 1: die schematische Darstellung eines Strömungssensors zur Bestimmung eines Strömungsparameters eines Fluides gemäß einem Ausführungsbeispiel der vorliegenden Erfindung;
- Fig. 2a: die schematische Darstellung eines Messkopfs mit Strömungssensor gemäß einem Ausführungsbeispiel der vorliegenden Erfindung;
- Fig. 2b: die schematische Querschnittsdarstellung eines Strömungssensors mit Sensor-Nacktchip freistehend während des Betriebes in einem Fluidkanal angeordnet gemäß Ausführungsbeispielen der vorliegenden Erfindung;
- Fig. 3: die schematische Draufsicht eines Messkopfs mit freistehenden MEMS-Sensor in einem Strömungskanal, der als Venturidüse mit beidseitigen Sieben zur Strömungslaminierung ausgeführt ist;
- Fig. 4: eine schematische Detailansicht der Draufsicht eine Messkopfs mit Sensorchip gemäß einem Ausführungsbeispiel;
- Fig. 5: eine schematische Darstellung eines Sensorchips mit einer Winkelanstellung zu einem Fluidstrom;
- Fig. 6: eine schematische Darstellung der Herstellung eines Sensorchips mit einem thermischem Membransensorlement;
- Fig. 7: eine schematische Darstellung eines Sensorchips für einen erfindungsgemäßen Strömungssensor sowie ein thermisches Membransensorelement und eines darauf befindlichen Thermopiles gemäß einem Ausführungsbeispiel der vorliegenden Erfindung;
- Fig. 8: ein Diagramm zur Verdeutlichung der Arbeitsweise eines thermischen Strömungssensors nach Sven Zinober (Redundanzstrukturen zur Erhöhung der Sicherheit und Zuverlässigkeit von Mikrosystemen, Dissertation, AlbertLudwig-Universität Freiburg i. Breisgau, 09.07.2002);
- Fig. 9a: die schematische Darstellung eines Sensorchips mit zwei thermischen Membransensorelementen und einem Kondensatheizer gemäß Ausführungsbeispielen der vorliegenden Erfindung;
- Fig. 9b: eine schematische Querschnittsdarstellung eines Sensorchips mit gekapselter Aussparung auf der Rückseite des thermischen Membransensorelements;
- Fig. 10: ein schematische Darstellung eines Strömungsmesssystems mit Ansteuereinrichtung und optionaler Druckmesseinrichtung gemäß einem Ausführungsbeispiel der vorliegenden Erfindung; und
- Fig. 11: ein schematisches Blockdiagramm zum Verfahren zur Bestimmung eines Strömungsparameters gemäß einem Ausführungsbeispiel.

### Detaillierte Beschreibung der Figuren

Bezüglich der nachfolgenden Beschreibung der Ausführungsbeispiele der vorliegenden Erfindung sollte beachtet werden, dass in den unterschiedlichen Figuren für funktional identische bzw. gleichwirkende oder funktionsgleiche äquivalente Elemente oder Schritte zur Vereinfachung in der gesamten Beschreibung die gleichen Bezugszeichen verwendet werden.

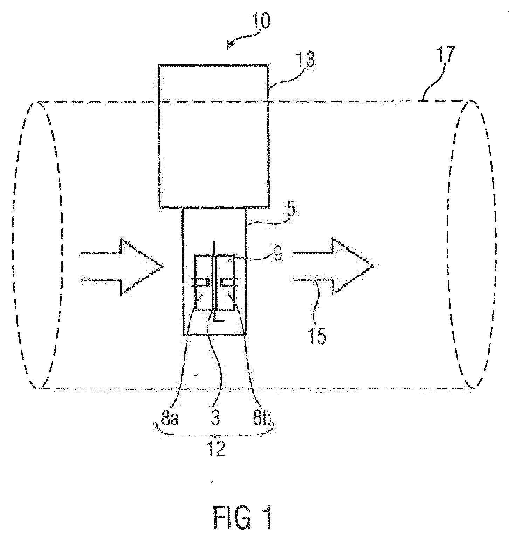

Fig. 1 zeigt einen Strömungssensor 10 zur Bestimmung eines Strömungsparameters eines Fluides 15. Der Strömungssensor weist einen Sensorchip 5 auf, wobei der Sensorchip 5 zumindest ein thermisches Membransensorelement 12 aufweist, das ausgebildet ist, um einen Strömungsparameter des Fluides 15 in einem Messbereich zu bestimmen oder um eine Fluidtemperatur, beispielsweise eine relative Fluidtemperatur oder eine absolute Fluidtemperatur zu bestimmen. Das thermische Membransensorelement 12 weist zwei Temperatursensoren auf. Bei diesen Temperatursensoren kann es sich beispielsweise um Thermoelemente, um Widerstandsstreifen beispielsweise mit Platin oder Nickel oder um Thermopiles mit Kontaktpaarungen handeln. Das thermische Membransensorelement besitzt eine Membran 9, die zwei zueinander beabstandete Thermoelementübergänge, das heißt in Serie zu einem Thermostapel bzw. "Thermopile" abwechselnd verschaltete Kontaktpaarungen 8a, 8b (zum Beispiel Übergänge zwischen Aluminium und Poly-Silizium oder zwischen zwei Metallen), und ein zwischen den Thermoelementübergängen angeordnetes Heizelement 3 aufweist. Der Sensorchip 5 besitzt also ein thermisches Membransensorelement 12 mit zwei zueinander beabstandeten Temperatursensoren, beispielsweise zwei Thermoelemente, wobei von jedem Thermoelement jeweils ein Thermoelementübergang auf der Membran angeordnet ist und die jeweils zweiten Thermoelementübergänge der beiden Thermoelemente auf den Sensorchip-Bulk bzw. - Sensorchip-Rahmen angeordnet sind. Zwischen den Thermoelementübergängen der beiden Thermoelemente ist auf der Membran 9 ein Heizelement 3 angeordnet. Der Sensorchip ist so ausgebildet, um in einem Betrieb zur Messung des Strömungssensors als freistehender Sensorfinger von dem Fluid 15 umströmt zu werden. Der Strömungssensor kann im Betrieb beispielsweise in ein Rohr bzw. in einen Fluidkanal 17 eingeführt sein, so dass ein Fluid 15 den in dem Fluidkanal 17 freistehend angeordneten Sensorchip 5 umströmt.

Gemäß einem Aspekt der vorliegenden Erfindung ist also der zur Strömungsmessung benötigte Teil des Sensorchips in direktem Kontakt zum Medium bzw. zum Fluid. Insbesondere ist in der Nähe der Sensormembran 9 bzw. des thermischen Membransensorelementes 12 kein Gehäuseteil oder keine sonstige Vorrichtung vorhanden, die eine Anlagerung eines Kondensats auf dem Sensorchip begünstigt. Bei dem Kondensat kann es sich beispielsweise um in Luft gelöste Wassertröpfchen handeln, die sich beilspielsweise aufgrund von Kapillarkräften bei vorhandenen Gehäuseteilen in der Nähe des für die Strömungsmessung benötigten Teils des Sensorchips besonders gut bilden können. Das heißt, man kann diese Anordnung als freistehenden Nacktchip im Mess- bzw. Fluidkanal bezeichnen.

Der erfindungsgemäße Strömungssensor kann beispielsweise in der Medizintechnik, der Luftraumfahrttechnik, der industriellen Prozesstechnik, der Automobiltechnik sowie der Heizungs- und Umwelttechnik eingesetzt werden. Eine Einsatzmöglichkeit in der Medizintechnik besteht z. B. in der Atemgasmessung, d.h. zur zeitlich aufgelösten Messung des Volumenstroms beim Ein- und Ausatmen. Dies kann mittels thermischer Strömungssensoren geschehen, insbesondere mittels mikrotechnischer Membransensoren wie im vorliegenden Ausführungsbeispiel, was sehr vorteilhaft sein kann, da sich die wesentlichen Elemente auf einer dünnen Membran 9 befinden, so dass sich u.a. eine hohe Messempfindlichkeit, eine hohe Messdynamik, eine schnelle Ansprechzeit und ein relativ geringer Energieverbrauch während der Messung realisieren lässt.

Der Strömungssensor 10 kann also vorteilhafterweise eine hohe Messempfindlichkeit bei geringer Strömungsgeschwindigkeit im für die künstliche Beatmung wichtigen Umkehrpunkt zwischen Exspiration (Ausatmen) und Inspiration (Einatmen) besitzen. Ferner kann eine hohe Messdynamik sowohl für den Strömungsmessbereich als auch für die zeitlich genaue Auflösung der hochdynamischen Atemkurven erzielt werden. Je geringer die thermische Masse des Membransensorelements ist, desto höhere zeitliche Auflösung kann erzielt werden. Beispielsweise kann im Fall eines mikrotechnischen Sensors eine zeitliche Auflösung von rund 1 ms erreicht werden. Ein weiterer Vorteil der oben genannten Strömungssensoren mit thermischem Membransensorelement liegt im relativ geringen Energieverbrauch, weshalb sich die Sensoren auch für den Batteriebetrieb in tragbaren Geräten gut eignen.

Der Strömungssensor, wie er in Fig. 1 beschrieben ist, weist nun beispielsweise gegenüber dem oben erwähnten Kammerkopf-Sensor den Vorteil auf, dass der Strömungssensor eine geringere thermische Masse besitzt, da sich nur der Sensorchip an einer Seite mit dem Gehäuse des Strömungssensors in Kontakt befindet. Im Gegensatz dazu befindet sich bei dem oben erwähnten Kammerkopf-Sensor der gesamte Scnsorchip in einem Gehäuse, so dass beim Aufheizen des Sensorchips auf eine Temperatur, die höher ist als eine Kondensationstemperatur oder eine Taupunkttemperatur im Falle von Wasser, ein deutlich höherer Energieaufwand nötig ist.

Ferner begünstigt der relativ kleine Strömungs- bzw. Bypasskanal beim Kammerkopf-Sensor die Ansammlung bzw. Kondensation von Wassertröpfchen im Bereich des Sensorchips durch den Kapillareffekt. Im Gegensatz dazu ist der erfindungsgemäße Strömungssensor frei in der Hauptströmung eines Fluides platziert, so dass im Bereich des Strömungssensors keine "kleinen" Strömungskanäle bzw. Gehäuseteile vorhanden sind, die eine Anlagerung bzw. Kondensation oder Betauung mit einem in einem Fluid enthaltenen kondensierbaren Stoff, wie zum Beispiel Wassertröpfchen in Luft, begünstigt werden.

Ferner ist eine mögliche Anhaftung eines Kondensats, wie z.B. von Wassertropfen an solch einem freistehenden Nacktchip, wie er in Fig. 1 offenbart ist, aufgrund der geringeren Oberfläche ohne Hinterschneidungen im Wesentlichen geringer, so dass auch einer Kondensatanhaftung entgegengewirkt wird. Der Strömungssensor ist also so aufgebaut, dass eine temperaturabhängige Kondensatabscheidung erschwert wird.

Bei dem von dem Strömungssensor 10 bestimmten Strömungsparameter kann es sich, wie oben bereits erwähnt wurde, beispielsweise um eine Strömungsgeschwindigkeit, einen Massendurchfluss, einen Volumendurchfluss, eine Zustandsgröße oder einen anderen stoffbezogenen Parameter des Fluides handeln. Das Fluid kann ein Gas oder eine Flüssigkeit sein. Mit dem Strömungssensor kann eine Strömungsgeschwindigkeit des Fluides zeitlich hochauflösend bestimmt werden. Der Strömungsmesser kann ein Durchfluss eines Gases oder einer Flüssigkeit, also eines Fluides, beispielsweise durch ein Rohr oder einen Fluidkanal, 17 bestimmen oder messen. Es kann ein Parameter bestimmt werden, mit dessen Hilfe dann in einer Auswerteeinrichtung ein Strömungsparameter im obigen Sinne berechnet werden kann. Die Auswerteeinrichtung kann mit dem Strömungssensor elektrisch gekoppelt sein. Sie kann beispielsweise Teil einer Ansteuer- oder Regeleinrichtung sein, die den Strömungssensor ansteuert. Beispielsweise kann bei einer Bestimmung eines Volumendurchflusses die Fließgeschwindigkeit des Mediums gemessen werden und dann der Durchfluss über die Formel Volumendurchfluss = Rohrquerschnittsfläche x Geschwindigkeit bestimmt werden. Das Ergebnis kann beispielsweise in Liter/Minute angegeben werden.

Der Strömungsmesser kann zusätzlich integrierte oder externe Sensorteileinheiten aufweisen, mit denen eine Temperatur, ein Druck, eine stoffspezifische Größe oder eine Feuchtigkeit des Fluides bestimmt bzw. gemessen wird. Die Vorrichtung 10 bzw. der Strömungssensor kann beispielsweise einen Messkopf 13 und einen Eintauchfühler umfassen, der vorzugsweise bis zu einer Rohrmitte bzw. Fluidkanalmitte eingetaucht wird und mit seiner Messfläche beispielsweise in einem Winkelbereich α von 5° bis 75° gegen die Fluidströmung angestellt wird.

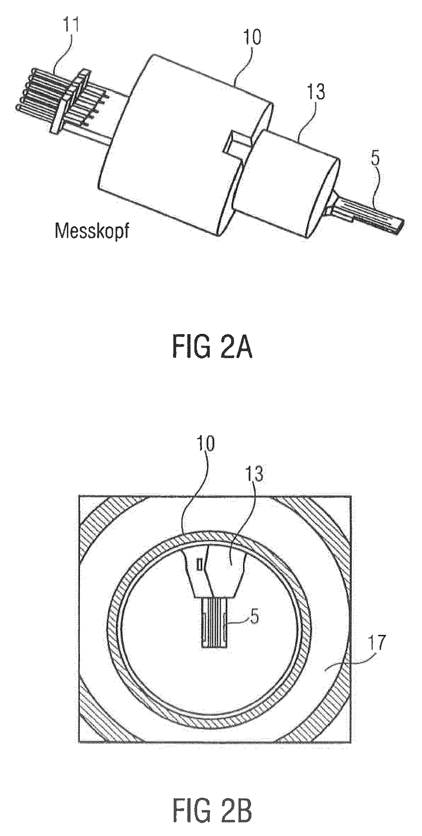

Wie in den Figuren 2a und 2b gezeigt ist, kann ein Strömungssensor 10 mit einem Sensorchip an einem Messkopf 13 befestigt sein, der entsprechende elektrische Anschlüsse 11 aufweist, wobei beim Betrieb des Strömungssensors der Sensorchip 5 mit dem thermischen Membransensorelement 12 als freistehender Sensorfinger von dem Fluid umströmt wird. Der Strömungssensor kann sich vom Messkopf her kommend zum Sensorchip verjüngten. Der Strömungssensor mit dem Sensorchip kann in einem Fluidkanal 17, wie in Fig. 2b dargestellt ist, freistehend als "Nacktchip" von dem Fluid umströmt werden, um so einen Strömungsparameter des Fluides besser, also z.B. mit einer geringeren Fehlerrate, in einem größerem Messbereich oder mit einer höherem Messdynamik, bestimmen zu können. Bei dem Strömungssensor kann es sich um einen mikroelektromechanischen-Halbleiter (MEMS)- Sensor handeln. Das heißt, der Sensorchip kann beispielsweise ein Silizium-Halbleiterchip sein, der mikrosystemtechnisch strukturiert wurde. Denkbar ist auch der Einsatz anderer Halbleitermaterialien, wie zum Beispiel Siliziumcarbid, Galliumarsenid, Indiumphosphid usw., die in der Halbleitertechnik und in der Mikroelektromechanik eingesetzt werden. Glas, Keramik oder ähnlichen Materialien können ebenfalls als Substrat für den erfindungsgemäßen Strömungssensor bzw. Sensorchip dienen.

Die Vorrichtung 10 kann gemäß einiger Ausführungsbeispiele für Rohrquerschnitte (siehe Fig. 2b) geeignet sein, die größer sind als der durch den Sensor verdeckte Rohrquerschnitt. Beispielsweise kann der Rohrquerschnitt bzw. - Fluidkanalquerschnitt wenigstens dreifach, vierfach oder zehnfach so groß sein, wie der durch den Sensor verdeckte Querschnitt des Fluidkanals 17. In Fig. 2b ist die schematische Darstellung eines Strömungssensors mit Messkopf 13 der in einem Strömungskanal 17 positioniert ist gezeigt. Außerdem sollte an der Messstelle das ermittelte Sensorsignal noch eine ausreichende Aussagefähigkeit über das Strömungsprofil des Gesamtquerschnitts des Fluidkanals zulassen.

In einigen Ausführungsbeispielen kann das eigentliche Sensorelement ein mikrotechnischer Siliziumchip sein, der als Nacktchip an einer Seite verbunden mit dem Messkopf bzw. dem Eintauchfühler freistehend montiert ist und vom Messmedium umströmt wird. Dabei kann der sensitive Bereich, also die Sensormembran, z.B. also das thermische Membransensorelement idealerweise mittig im Messrohr angeordnet sein, um dort beispielsweise den Massen- bzw. Volumenstrom zu messen. Der Sensorfinger bzw. der Sensorchip des Strömungssensors, der während des Betriebes freisteht, kann mindestens einen vierfachen, fünffachen oder zehnfachen einer Sensorchipbreite entsprechenden Abstand von einer Fluidkanalwand des Fluidkanals 17, in dem der freistehende Sensorfinger von dem Fluid umströmt wird, aufweisen.

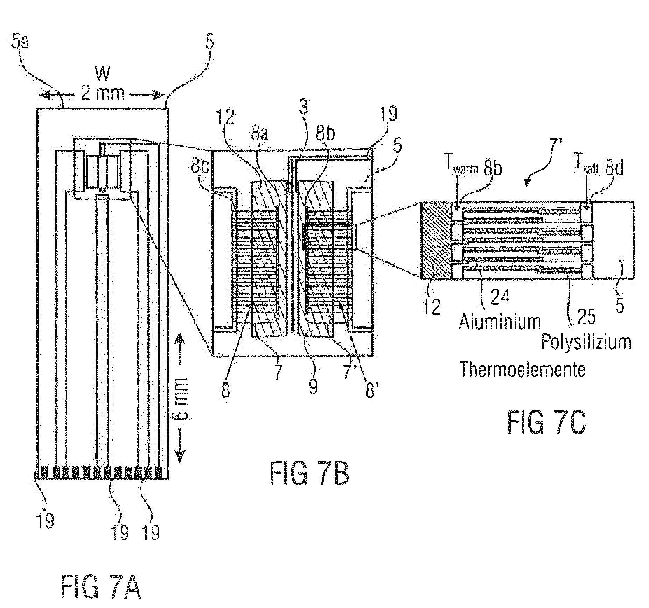

Bei dem Sensorchip 5 kann es sich beispielsweise um einen rechteckigen Sensorchip handeln. Allgemein kann eine Länge L des Sensorchips mindestens dreimal, viermal oder fünfmal so lang wie eine Breite W des Sensorchips sein. Das heißt, eine Längsseite des Sensorchips kann mindestens dreimal, viermal oder fünfmal länger sein als eine Breite des Sensorchips. Der Sensorchip kann also länglich ausgeformt sein, wobei die Längskante dreimal oder länger als die Schmalseite des Chips ist, um die sensitiven Elemente, also z.B. das thermische Membransensorelement mit dem Heizer und die beiden Temperatursensoren in der Strömung des Fluides freistehend und außerhalb eines strömungstechnisch störenden Übergangs zu einer mechanischen Verankerung mit dem Messkopf 13 platzieren zu können. Die elektrischen Zuleitungen 19 (siehe Fig. 7) für den Sensorchip können an einer Stirnseite des Sensorchips 5 liegen und die aktiven sensorischen Elemente, wie z.B. das thermische Membransensorelement 12 in einem ersten Drittel der Chipfläche am gegenüberliegenden Ende der Verankerung mit dem Messkopf 13 bzw. am gegenüberliegenden Ende des Chips angeordnet sein. Dadurch kann erreicht werden, dass die Strömungsmessung möglichst wenig durch die Verbindung zum Rumpf des Messkopfes bzw. zum Sensorfingergehäuse beeinflusst wird.

Bei dem Strömungssensor kann es sich beispielsweise um einen thermischen Flowsensor, einen Flussratensensor bzw. um ein Flowmeter handeln. Der Strömungssensor 10 kann beispielsweise aus Silizium bestehen. Das sensitive Element des Strömungssensors ist dabei in einigen Ausführungsbeispielen eine dünne Siliziumnitrid-Membran, die beispielsweise eine Größe von 100 bis 500 µm x 400 bis 1000 µm, also z.B. 300 x 600 µm² aufweisen kann.

Beim Strömungssensor 10 wird der in einigen Ausführungsbeispielen nötige Wärmefluss zur Bestimmung eines Strömungsparameters durch einen Heizer 3, der beispielsweise als ein linienförmige Heizung auf der Membran ausgebildet ist, bereitgestellt. Entsprechend angeordnete Thermoelemente mit den entsprechenden Thermoelementübergängen auf beiden Seiten des Heizelementes können die Wärmeverteilung über die Membran registrieren. Diese Wärmeverteilung ändert sich, wenn Gase, Flüssigkeiten oder allgemein ein Fluid über die Membran strömen. Damit kann sowohl auf Richtung als auch auf die Flussdichte der Substanzmenge geschlossen werden. Es kann also beispielsweise eine Strömungsrichtung, ein Massendurchfluss, ein Volumendurchfluss oder eine Strömungsgeschwindigkeit des über die Membran, also dem thermischen Membransensorelement 12, strömenden Fluidcs bestimmt werden.

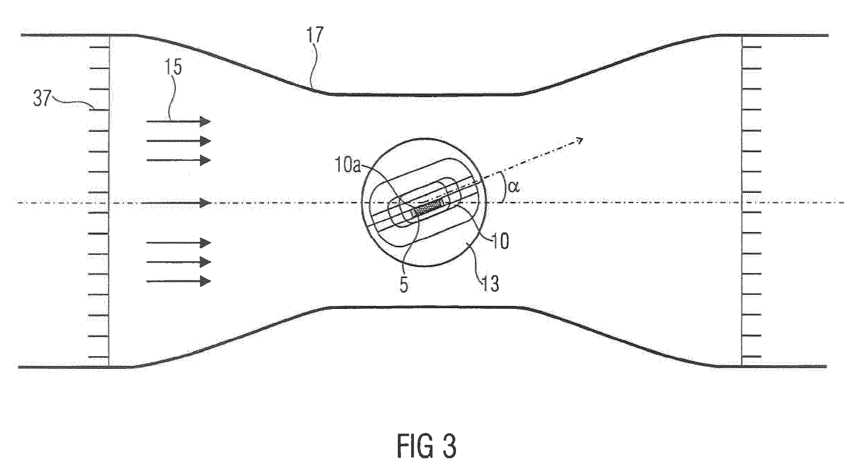

Die erfindungsgemäße Vorrichtung 10 kann zur Messung sich dynamisch ändernder und mit Wasser gesättigter Luftströmungen verwendet werden. Für eine akkurate Messung der Strömungsgeschwindigkeit bzw. des Massestromes kann sich der Messort in einer rohrgebundenen Messtrecke befinden, die mit ihrer Ausführung zu einer Glättung des Strömungsprofils beiträgt. Dies ist schematisch in der Fig. 3 gezeigt. Ein in Draufsicht dargestellte Halterung mit Messkopf 13 und dem freistehenden MEMS-Sensor 10 in einem Strömungskanal 17, der in diesem Ausführungsbeispiel als Venturidüse mit beidseitigen Sieben 37 zur Strömungs-Laminarisierung ausgeführt ist. Der MEMS-Sensor 10 steht in einem Winkel α zu einer Hauptströmungsrichtung 15 (Pfeile), um optimal gleichgerichtet von dem Fluid umströmt zu werden.

Der Strömungssensor 10 kann in der rohrgebundenen Messstrecke derart platziert sein, dass er mit seiner sensitiven Messfläche 10a in einem Winkel α zur Hauptstromrichtung 15 des Messfluids angestellt ist. Dadurch wird erreicht, dass das Fluid im thermischen Grenzschichtbereich gerichtet über die Messmembran strömt. Die Winkelanstellung vermindert Strömungsabschattungen oder sich bis in den Membranbereich fortpflanzende Strömungswirbel, die durch eine Anströmkante erzeugt werden kann. Damit kann die Aufnahme zuverlässiger Strömungsmesswerte im Membranbereich des MEMS-Sensors erreicht werden.

Gemäß einem Ausführungsbeispiel kann der Strömungssensor 10 einen Sensorchip 5 aufweisen, der sowohl auf einer Vorderseite 5a als auch auf einer gegenüberliegenden Rückseite 5b zumindest ein thermisches Membransensorelement 12 aufweist. Dies kann beispielsweise durch beidseitige Strukturierung oder z.B. durch einen Chip-Stapel, der aus zwei einseitig strukturierten Sensorchips, die an ihren jeweiligen Rückseiten zusammengefügt sind, erfolgen. Um in einem geraden Rohr in beiden Richtungen nach dem kalorimetrischen Prinzip messen zu können, kann sich also eine Messmembran sowohl auf der Vorder- als auch auf der Rückseite des MEMS-Sensors befinden. Die dann jeweils der Strömungsrichtung abgekehrte Sensor-Membran kann zu zusätzlichen Messaufgaben herangezogen werden, wie z.B. der Temperatur- , der Feuchte- oder der thermischen Bestimmung der Volumenanteile eines (bekannten) binären Gasgemisches im Hauptstrom.

Mit der erfindungsgemäßen Vorrichtung 10 kann punktuell, d.h. an einem Ort eines Rohrquerschnitts bzw. Fluidkanalquerschnitts ein Strömungsparameter bestimmt werden, deshalb sollte für eine ausreichend genaue Strömungsmessung bzw. Strömungsparameterbestimmung eine gleichbleibende Verteilung des Strömungsgeschwindigkeitsprofils über den Rohrquerschnitt im gesamten Längsbereich gewährleistet werden. Dies kann durch geeignete Einbauelemente zur Strömungslaminarisierung vor der Messstelle, wie z.B. durch den Einbau von Siebe und/oder durch die vorteilhafte Rohrgestaltung am Ort der Messung erfolgen. Damit kann eine noch genauere Bestimmung eines Strömungsparameters des Fluides durch den im Betrieb des Strömungssensors als freistehender Sensorfinger von dem fluidumströmten Sensorchip erreicht werden.

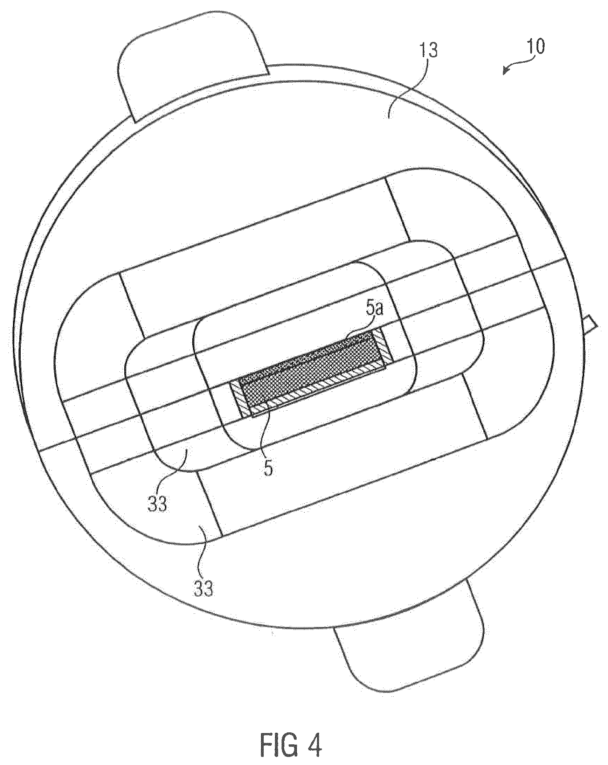

Fig. 4 zeigt eine schematische Detailansicht der Draufsicht eines Strömungssensors 10 mit Messkopf 13 und Sensorchip 5 gemäß einem Ausführungsbeispiel der vorliegenden Erfindung. Der Sensorchip 5 mit seiner aktiven Vorderseite 5a, auf der sich das thermische Membransensorelement befindet, ist über Verjüngungen 33 mit dem Messkopf bzw. dem Sensorgehäuse 13 verbunden. Die aktive Vorderseite 5a des Sensorchips kann gegenüber der Hauptströmung eines Fluides um einen Winkel α geneigt sein, so dass das Fluid im thermischen Grenzschichtbereich gerichtet über die Messmembran strömt.

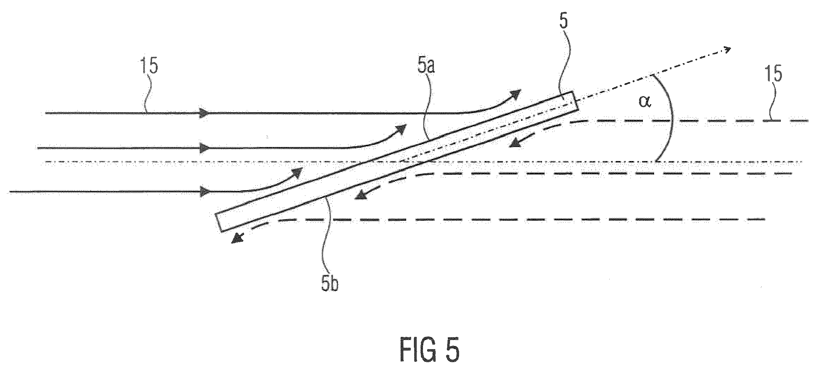

Fig. 5 zeigt die schematische vergrößerte Anströmfläche des Sensorchips 5 eines Eintauchfühlers. Durch die Winkelanstellung um den Winkel α gegenüber einer Strömungsrichtung 15 des Fluides bildet sich eine gleichgerichtete weitgehend wirbelfreie Fluidschicht auf der angeströmten Sensorseite 5a aus (durchgezogene Pfeile). Erfolgt die Anströmung (gestrichelte Pfeile) im geraden Messrohr von der anderen Seite, also der Rückseite 5b des Sensorchips, so können sich in Ausführungsbeispielen auf der Rückseite 5b des MEMS-Chips 5 gleichartige Sensorstrukturen wie auf der Vorderseite 5a befinden: Es können also beispielweise, sowohl auf der Vorderseite 5a, als auch auf der Rückseite 5b des Senorschips 5, jeweils mindestens ein thermisches Membransenorelement 12 ausgebildet sein. Dies kann, wie oben bereits erwähnt, z. B. durch einen Chipstapel oder eine rückseitige Strukturierung erreicht werden. Durch die beidseitige Strukturierung mit den thermischen Membransenorelementen lässt sich dann auch jeweils eine Strömungsrichtung in beide möglichen Flussrichtungen bestimmen. Bei einer Anwendung des Strömungssensors als Spirometer kann also z.B. ein Einatmen und ein Ausatmen unterschieden werden.

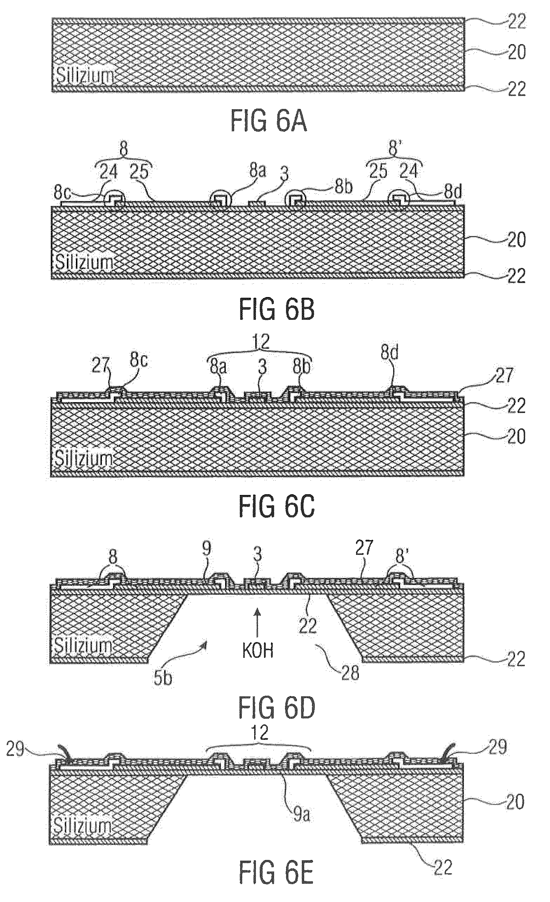

In Fig. 6 ist der Herstellungsprozess und der Aufbau eines erfindungsgemäßen Strömungssensors 10 kurz erläutert. Auf einem Siliziumwafer oder Siliziumsubstrat 20 wird zunächst eine Haftschicht aus Trockenoxid und darauf eine Schicht aus Siliziumnitrid (Si₃N₄) 22 aufgebracht (Fig. 6A). Die Trockenoxidschicht kann z.B. eine Dicke von 50nm aufweisen und die Siliziumnitridschicht eine Dicke von 100nm. Als nächstes werden, wie in der Fig. 6B dargestellt ist, der Heizer 3 und die Temperatursensoren 8 erzeugt. Bei den Temperatursensoren 8 kann es sich beispielsweise um Thermoelemente bzw. Thermopiles handeln, wobei jedes Thermoelement 8, 8' jeweils zwei Thermoelementübergänge aufweist. Das Thermoelement 8 weist die Thermoelementübergänge 8a und 8c auf und das Thermoelement 8' die Thermoelementübergänge 8b und 8d. Das Heizelement 3 wird in Form zweier linienförmiger Heizdrähte auf die Membran strukturiert.

Die Detektierung einer Membranerwärmung zur Bestimmung eines Strömungsparameters eines Fluides erfolgt z.B. über Dünnschichtthermoelemente an deren Rändern, also an den Rändern der Membran 9. Die Thermoelemente 8, 8' nutzen den Seebeck-Effekt aus, wonach eine elektrische Spannung auftritt, sobald zwei unterschiedliche, miteinander verbundene Metalle oder leitfähige Materialien eine Temperaturdifferenz erfahren. Eine Kontaktstelle jedes Thermoelementes 8, 8', nämlich die Kontaktstelle bzw. der Thermoelementübergang 8a für das Thermoelement 8 und die Kontaktstelle 8b für das Thermoelement 8' befindet sich dabei auf der durch den Heizer 3 erwärmten Sensormembran 9, während sich die andere Kontaktstelle eines jeden Thermoelementes 8, 8', nämlich die Kontaktstelle 8c für das Thermoelement 8 und der Thermoelementübergang 8d für das Thermoelement 8' sich auf dem Siliziumrahmen bzw. auf dem Siliziumbulk befinden. Der Siliziumrahmen bzw. der Siliziumbulk ist, wie in der Fig. 6D schematisch dargestellt ist, nicht unterätzt.

Die hohe thermische Wärmeleitfähigkeit des Siliziums sorgt für eine nahezu konstante Referenztemperatur. Um kleinere Temperaturunterschiede detektieren zu können, können in einigen Ausführungsbeispielen der vorliegenden Erfindung auf jeder Seite des Heizers je 5, je 10, je 20 oder je 50 Thermoelemente bzw. Kontakte pro Seite angeordnet sein und zu einem sogenannten Thermopile in Reihe verschaltet sein. Pro Kontakt kann beispielsweise eine Spannung von 180 µV/K abgegriffen werden. Das heißt, gemäß einiger Ausführungsbeispiele der vorliegenden Erfindung kann das thermische Membransensorelement 12 nicht nur zwei zueinander beabstandete Thermoelementübergänge aufweisen, sondern eine Mehrzahl von solchen zueinander beabstandeten Thermoelementübergängen und ein zwischen dieser Mehrzahl von zueinander beabstandeten Thermoelementübergängen angeordnetes Heizelement 3. Ein Thermoelementübergang kann aus zwei unterschiedlichen Metallen oder zumindest leitfähigen oder halbleitenden Materialien bestehen. Beispielsweise kann das Thermoelement zumindest eines der folgenden Metalle aufweisen: Wismut, Konstantan, Nickel, Platin, Aluminium, Rhodium, Kupfer, Gold, Silber, Eisen, Titan-Wolfram oder Chrom. Bei den Thermopiles 7, 7' kann jeweils ein Thermoelementübergang auf der Sensormembran liegen und der jeweils dazugehörige zweite Thermoelementübergang auf dem Sensorchipbulk, also z.B. den Siliziumbulk.

Als Material für die Heizer 3 und einen ersten thermoelektrischen Partner eines Thermoelementübergangs 8a, 8b bzw. 8c, 8d kann ein dotiertes und damit gut leitendes Polysilizium auf der Membran 9 abgeschieden und strukturiert werden. Die Dicke des Polysiliziums kann beispielsweise ca. 100 nm betragen. In einem Prozessschritt kann also, wie in der Fig. 6B schematisch dargestellt ist, als thermoelektrischer Partner für den thermoelektrischen Übergang, Polysilizium 25 teilweise auf der Membran 9 bzw. dem zukünftigen Membrangebiet 9 und teilweise auf dem Siliziumbulk abgeschieden werden. In einem weiteren Prozessschritt wird dann beispielsweise aus Aluminium 24 der jeweils zu einem Thermoelement gehörige zweite Thermoelementübergang sowie die elektrischen Leiterbahnen und Kontaktflächen 29 (Pads) zum späteren Drahtbonden der Chips aufgebracht. Das Aluminium kann in einer Dicke von beispielsweise ca. 300 nm aufgebracht werden.

Anschließend wird der Wafer, wie in Fig. 6C dargestellt ist, mit einem Schichtstapel 27 aus Siliziumoxid und -Nitrid vollflächig überzogen. Der Schichtstapel 27 kann z.B. eine Dicke von beispielsweise ca. 1 µm aufweisen. Damit kann eine ausreichende Passivierung der Funktionselemente des Sensorchips gegenüber auch aggressiven Medien erreicht werden. Nach Aufbringen der Passivierung 27 kann von der Rückseite 5b her, also von der Seite, die den Funktionselementen, wie dem Heizer 3 und den Thermoelementen 8, 8' gegenüberliegt, beispielsweise durch nasschemisches anisotropes Ätzen mit Kaliumhydroxid (KOH) unterhalb der späteren Membran 9 eine Grube bzw. Aussparung 28 strukturiert werden.

Wie in Fig. 6D gezeigt ist, dient die Siliziumnitridschicht 22 als Ätzstopp von der Rückseite, so dass die Sensormembran 9 nach dem Ätzen stehen bleibt. Die Rückseite 9a der Sensormembran liegt also frei. Wie in Fig. 6E schematisch dargestellt ist, kann danach durch lokales Entfernen der Passivierung 27 und Freilegen der Bondpads 29 eine Bondung für die elektrischen Anschlüsse der Thermoelemente 8, 8'und des Heizers 3 durchgeführt werden.

In Fig. 7 ist die Aufsicht eines Sensorchips 5 in einem unterschiedlichen Detaillierungsgrad der einzelnen Elemente dargestellt. Dabei zeigt die Fig. 7A die Aufsicht eines Mikroskopbildes des Strömungssensors 5, und die Fig. 7B eine schematische Darstellung der Aufsicht einer Membran 9 bzw. des thermischen Membransensorelementes 12 mit den Heizern 3 und den zwei gegenüber angeordneten thermoelektrischen Übergängen, die hier als in Reihe geschaltete Thermopiles 7, 7' ausgebildet sind. Ferner ist in der Fig. 7C eine Detailansicht eines Thermopiles 7' mit den in Reihe geschalteten Thermoelementen dargestellt.

Bei dem Sensorchip 5 kann es sich, wie in der Fig. 7A dargestellt ist, um einen länglich ausgebildeten Sensorchip handeln, bei dem beispielsweise die Längsseite L 6 mm beträgt und die Breite W 2 mm. In einigen Ausführungsbeispielen ist also eine Längskante des Sensorchips 5 dreimal oder länger als die Schmalseite W des Chips, um die sensitiven Elemente 12 in der Strömung freistehend und außerhalb des strömungstechnisch störenden Übergangs zur mechanischen Verankerung eines Messkopfs platzieren zu können. Die elektrischen Zuleitungen 19 liegen an einer Stirnseite des Sensors und sind dort mit dem Messkopf (nicht gezeigt in Fig. 7A) verbunden. Die aktiven sensorischen Elemente 12 können im ersten Drittel der Chipfläche am gegenüberliegenden Ende 5c des Sensorchips angeordnet sein. Damit wird eine Strömungsmessung möglichst wenig durch die Verbindung zum Rumpf bzw. Messkopf des Sensorfingergehäuses beeinflusst.

In der Aufsicht von Fig. 7B ist das thermische Membransensorelement 12 mit dem dazugehörigen Heizer 3 dargestellt. Die Thermoelemente 8 bzw. 8' sind auf ihrer jeweiligen Seite in Reihe zusammengeschaltet und zu jeweils einem Thermopile 7, 7' zusammengefasst. Die einzelnen Thermoelemente 8 bzw. 8' bzw. die Thermopiles 7, 7' besitzen jeweils Thermoelementübergänge 8a und 8b, die auf der Sensormembran 9 angeordnet sind und jeweils dazugehörige zweite Thermoelementübergänge 8c und 8d, die auf dem Chiprahmen bzw. dem Siliziumbulk angeordnet sind. Sowohl die Heizelemente 3 als auch die Thermoelemente 8, 8' weisen entsprechende elektrische Zuleitungen 19 auf. In Fig. 7C ist eine Teilansicht des Thermopiles 7' mit den Thermoelementübergängen 8b, 8d dargestellt. Die Figur zeigt die Thermoelementübergänge 8b, die Aluminium 24 und Polysilizium 25 aufweisen und die auf der Membran 9 angeordnet sind, und zum anderen auch die Thermoelementübergänge 8d, welche ebenfalls Polysilizium 25 und Aluminium 24 aufweisen, und die auf dem Siliziumbulk bzw. Sensorchiprahmen ausgebildet sind.

Im Betrieb, wenn also der Heizer 3 die Umgebung erwärmt, werden die Thermoelementüberlänge 8b des Thermopiles 7' eine höhere Temperatur T_{warm} aufweisen als die dazugehörigen Thermoelementübergänge 8d des Thermopiles 7', die eine geringere Temperatur Tₖₐₗₜ aufweisen. Die Membran 9 besitzt eine geringe thermische Masse, so dass bei Erwärmung des Heizelementes die Membran 9 relativ schnell die durch den Heizer erzeugte Temperatur annehmen wird, wohingegen die Temperatur auf dem Siliziumchip bzw. dem Sensorchiprahmen niedriger sein wird.

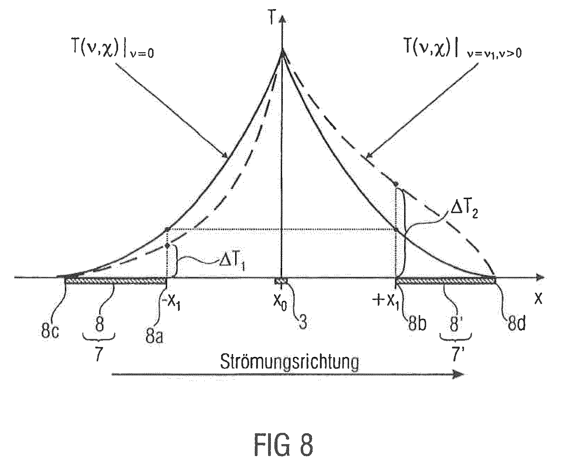

In Fig. 8 ist das Funktionsprinzip eines thermischen Strömungssensors 5 in einem Diagramm aus der Dissertation von Sven Zinober, "Redundanzstrukturen zur Erhöhung der Sicherheit und Zuverlässigkeit von Mikrosystemen", Dissertation, Albert-Ludwig-Universität Freiburg im Breisgau, 2002 gezeigt. Die durchgezogene Kurve in Fig. 8 zeigt den schematischen Temperaturverlauf entlang einer Fluidkanalwand auf einer Sensorfläche für ein ruhendes Medium bzw. Fluid und die gestrichelte Kurve bei einen angenommenen Durchfluss eines Fluides in der durch den Pfeil angedeuteten Strömungsrichtung von links nach rechts.

Bei einem ruhenden Medium bildet sich bei der Erwärmung der Sensormembran an der Stelle X₀ durch den Heizer 3 eine gleichmäßige abklingende Temperaturverteilung in Richtung der Thermoelemente 8 und 8' aus. Das heißt, bei einer ruhenden Strömung wird bei identischem Abstand -X₁ und +X₁ der Thermoelemente 8 und 8' von dem Heizer 3 eine identische Temperatur gemessen. Ruht also das Strömungsmedium, so wird die aktive Sensorfläche durch Wärmeleitung in der Membran und im Medium aufgeheizt. Die entsprechende Temperatur wird also von den Thermoelementen 8, 8' detektiert. Bei einer einsetzenden Strömung in der durch den Pfeil angedeuteten Strömungsrichtung bildet sich dann eine Temperaturverteilung aus wie sie durch die gestrichelte Kurve dargestellt ist. Bei Strömung wird also das Wärmeverteilungsfeld in Richtung des der Strömung abgewandten Thermoelementes 8' verschoben.

Fig. 8 zeigt also den schematischen Temperaturverlauf auf der Sensorebene mit den zwei Thermoelementen 8,8'und der dazwischen angeordneten Heizung 3 und der Verschiebung dieses Verlaufs in Abhängigkeit von der Strömungsgeschwindigkeit des darüber hinweg strömenden Fluides, wobei in Fig. 7 der Fall gezeigt ist, dass der Heizer 3 auf eine konstante Temperatur geheizt wird (auch als Konstant-Temperatur-Anemometrie, CTA, bezeichnet). Entsprechend den Anforderungen oder dem zu messenden Strömungsparameter kann der Heizer 3 auch auf unterschiedliche Weise, also mit konstanter Leistung, konstanter Spannung oder konstantem Strom (Konstant-Strom-Anemometrie, CCA), oder z.B. periodisch oder gepulst, geheizt werden. Ein Messkopf mit einem freistehenden Sensorfinger kann also so in einem strömenden Fluid angeordnet sein, dass das strömende Fluid zuerst ein erstes Thermoelement 8 umströmt, danach den Heizer 3 und weiter das zweite Thermoelement 8' umströmt.

Die Temperaturdifferenzen ΔT₁ und ΔT₂ geben den Unterschied zwischen dem zum Heizer 3 zugewandten jeweiligen heißen Kontakten 8a, 8b der Thermoelemente 8, 8' und dem vom Heizer 3 abgewandten Enden 8c, 8d der Thermoelemente 8, 8', die sich auf dem Siliziumbulk befinden und damit als kalter Kontakt bezeichnet werden kann. ΔT₁ ist die Temperaturdifferenz am Upstream-(Stromaufwärts) Sensor 8 und ΔT₂ am Dowmstream-(Stromabwärts) Sensor 8'. Ruht das Strömungsmedium, so wird die aktive Sensorfläche durch Wärmeleitung in der Membran und dem Medium aufgeheizt. Bei einsetzender Strömung, hier in Strömungsrichtung von links nach rechts wird dieses Wärmeverteilungsfeld nach rechts verschoben. Die Thermoelemente 8, 8' können wieder in Reihe geschaltet zu Thermopiles 7, 7' zusammengefasst werden. Das Strömungs-Medium oder Fluid erreicht also zunächst das Upstream-Thermopile 7, kühlt dieses, wird danach am Heizer 3 erwärmt und führt diese Wärme mit. Dadurch werden die heißen Kontakte 8b des strömungsabgewandten Downstream-Thermopiles 7' stärker aufgeheizt. Die Differenz der Temperaturunterschiede an den Thermopiles 7, 7', also ΔT₂ - ΔT₁ ist dann der von der Strömungsgeschwindigkeit abhängige Temperaturunterschied zwischen dem Dowmstream-Thermopile 7' und dem Upstream-Thermopile 7. Es kann also das Temperaturprofil zwischen der Membranmitte mit dem Heizer und dem Siliziumbulk gemessen werden.

Mit dem obigen Messprinzip lassen sich Strömungssensoren mit hoher Dynamik, z.B. von 1:10 bis 1:10000, z.B. also von 1:1000 bauen. Der Strömungssensor sollte bei Anwendung für Flüssigkeitsmessungen eine dichte Passivierung der Thermopile-Strukturen und deren Zuleitungen aufweisen, um so einen elektrischen Kurzschluss der aktiven Sensorelemente zu vermeiden. Der Strömungssensor 5 ist für Gase und Flüssigkeiten oder allgemein Fluide z.B. sowohl in einem Anemometer als auch in einem Kalorimeterbetrieb einsetzbar.

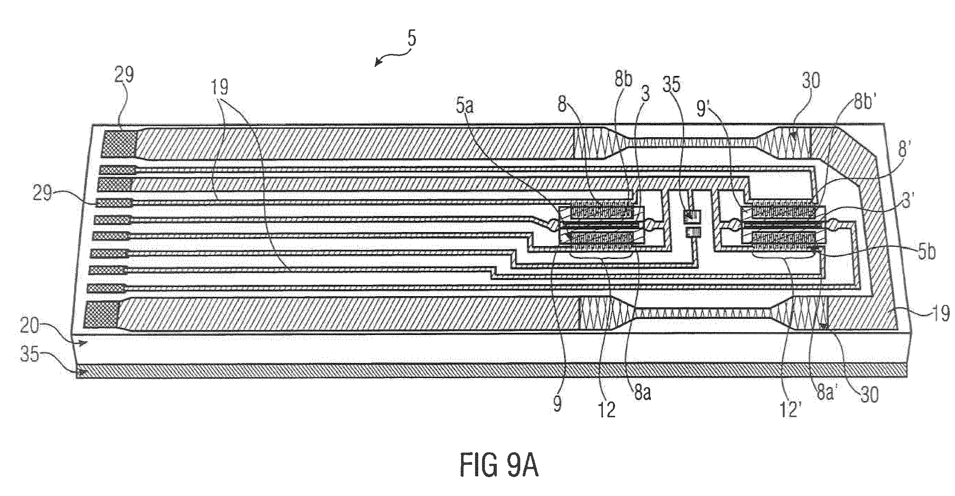

In Fig. 9a ist die schematische Darstellung eines Sensorchips 5 für einen Strömungssensor 10 zur Bestimmung eines Strömungsparameters eines Fluides gemäß weiterer Ausführungsbeispiele der vorliegenden Erfindung dargestellt. Der Sensorchip 5 kann demnach nicht nur ein Sensorelement, z.B. ein thermisches Membransensorelement 12 aufweisen, sondern auch zwei oder mehrere Sensorelemente, also z.B. auch ein zweites thermisches Membransensorelement 12'. Das thermische Membransensorelement 12 kann ausgebildet sein, um den Strömungsparameter des Fluides in einem bestimmten bzw. ersten Messbereich zu bestimmen oder um eine Fluidtemperatur des Fluides zu bestimmen. Bei der Fluidtemperatur kann es sich beispielsweise um eine absolute oder auch um eine relative Fluidtemperatur handeln. Beispielsweise kann es sich bei der relativen Fluidtemperatur um eine Temperaturdifferenz zwischen der Membran 9, die aufgrund ihrer geringen thermischen Wärmekapazität schnell die Fluidtemperatur annehmen kann und der Temperatur des Sensorchiprahmens bzw. des Siliziumbulks handeln. Das thermische Membransensorelement 12' weist zwei zueinander beabstandete Thermoelementübergänge 8a, 8b und ein zwischen den Thermoelementübergängen angeordnetes Heizelement 3 auf und wobei der Sensorchip 5 ausgebildet ist, um beim Betrieb des Strömungssensors als freistehender Sensorfinger vom Fluid umströmt zu werden.

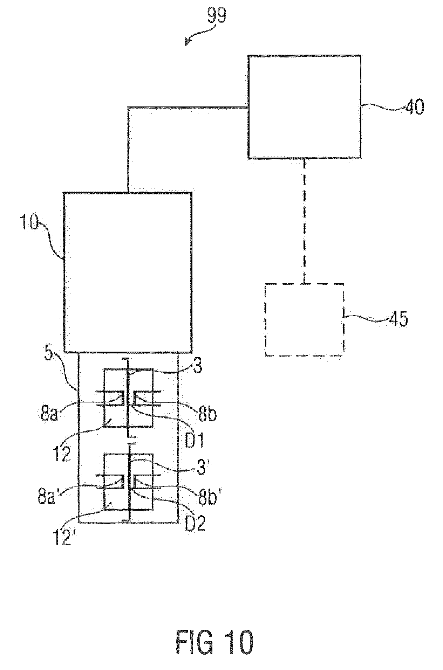

Wie in Fig. 9a gezeigt ist, kann der Sensorchip ein weiteres thermisches Membransensorelement 12' aufweisen, das ausgebildet ist, um einen Strömungsparameter des Fluides in einem weiteren bzw. zweiten Messbereich zu bestimmen oder um ebenfalls eine Fluidtemperatur zu bestimmen. Auch das weitere thermische Membransensorelement 12' kann zwei zueinander beabstandete Thermoelementübergänge 8a', 8b' und ein zwischen den Thermoetementübergängen angeordnetes Heizelement 3' aufweisen. Gegenüber dem ersten thermischen Membransensorelement 12 kann sich das zweite thermische Membransensorelement 12' dahin gehend unterscheiden, dass ein Abstand D1 (siehe Fig. 10) der zwei Thermoelementübergänge 8a, 8b des ersten Membransensorelements 12 zu dem dazwischen angeordneten Heizelement 3 unterschiedlich ist zu einem Abstand D2 der zwei Thermoelementübergänge 8a', 8b' des weiteren Membransensorelements 12' zu dem dazwischen angeordneten Heizelement 3'. Das heißt, die thermischen Membransensorelemente 12 und 12' unterscheiden sich untereinander dadurch, dass der Abstand der Thermoelementübergängen 8a und 8b bzw. 8a' und 8b' zu den jeweiligen Heizern 3, 3' einen unterschiedlichen Abstand D1 und D2 aufweisen. Durch den unterschiedlichen Abstand D1 und D2 der Thermoelementübergänge zu den jeweiligen Heizern, kann von den thermischen Membransensorelementen ein Strömungsparameter in unterschiedlichen Messbereichen bestimmt werden. Diese unterschiedlichen Messbereiche können sich z.B. auch überlappen. Mit einem geringerer Abstand können z.B. höhere Volumenströme gemessen werden, als mit einem größerem Abstand.

Gemäß einiger Ausführungsbeispiele der vorliegenden Erfindung kann der Sensorchip 5 also zwei vollständige ausgebildete thermische Membransensorelemente 12, 12' aufweisen. Diese Membransensorelemente 12 und 12' können beispielsweise je eine SiliziumNitrid/Oxiddünnschichtmembran 9, 9' aufweisen sowie einen linienförmigen Heizwiderstand 3, 3' aus Polysilizium, der jeweils in der Membranmitte quer zu einer Strömungsrichtung angeordnet ist und für jedes Membransensorelement separat angesteuert werden kann. Dazu symmetrisch können beidseitig wieder Thermopilestrukturen 7, 7' aus den entsprechenden Thermoelementen 8, 8' mit Kontaktpaaren, beispielsweise aus Polysilizium/Aluminium angeordnet sein. Die "warmen Kontakte" 8a, 8b, 8a', 8b' liegen dabei auf der Sensormembran 9, 9' und die kalten Kontakte 8c, 8d , 8c', 8d', wie oben beschrieben, beispielsweise auf dem Siliziumrahmen. Dies gilt, falls der Heizer in Betrieb ist und die jeweilige Membran 9, 9' wärmer ist als der Siliziumrahmen. Im normalen Sensorbetrieb ist dies auch der Fall. Sollte die Membran kälter sein als der Rahmen, liegen die kalten Kontakte der Thermopiles 7, 7' auf der Membran und die warmen auf dem Siliziumrahmen. Beide Sensorelemente 12, 12', also beispielsweise die beiden thermischen Membransensorelemente, können zur Strömungsmessung verwendet werden, können jedoch für unterschiedliche Messbereiche ausgelegt sein. Somit kann durch eine entsprechende Ansteuereinrichtung bzw. Regeleinrichtung durch Umschalten zwischen den beiden Membranen im Betrieb insgesamt ein größerer Messbereich für einen zu untersuchenden oder zu bestimmenden Strömungsparameter abgedeckt werden. In Ausführungsbeispielen bei denen der Sensorchip 5 auf der Rückseite 5b strukturiert ist und dort ebenfalls jeweils zwei Sensorelemente aufweist oder einen Chip-stapel aus zwei einseitig strukturierte Sensorchips die mit ihren Rückseiten verbunden sind, kann also der Strömungssensor z.B. auch vier Sensorelemente bzw. Thermische Membransensorelemente aufweisen. Zum Beispiel kann bei einer Verwendung des Strömungssensors bzw. Sensorchips in der Medizintechnik zur Atemgasmessung eine einfache Vorauswahl für die Beatmung von Erwachsenen oder Kindern durch eine entsprechende Messbereichsauswahl des thermischen Membransensorelementes erfolgen. Betrieben wird in der Regel nur eine Membran als Strömungssensor zur Bestimmung eines Strömungsparameters, während die zweite Membran zur Messung der Fluidtemperatur, z.B. der relativen Fluidtemperatur oder auch der absoluten Fluidtemperatur dient. Zur Messung der Fluidtemperatur braucht in Ausführungsbeispielen der vorliegenden Erfindung das Heizelement 3' der zweiten Membran 12' nicht betätigt werden. Durch die äußerst geringe thermische Masse der nicht beheizten Membran nimmt diese sehr schnell die Temperatur des Umgebungsmediums, d.h. des Fluides an und eignet sich somit hervorragend zur dynamischen Temperaturmessung des Fluides. Durch die geringe thermische Masse der Membran ist diese "thermisch isoliert" gegenüber dem Sensorchipbulk, also z.B. gegenüber dem Siliziumbulk. Mit Hilfe der Thermopiles 7, 7' bzw. Temperatursensoren 8, 8' wird dann die Differenztemperatur zwischen der Membran - d.h. der Fluidtemperatur - und der Temperatur des Chiprahmens gemessen. Die zur Temperaturdifferenz proportionale Spannung der Thermopiles drückt dann den relativen Temperaturunterschied zwischen dem Chiprahmen bzw. Siliziumrahmen und der Fluidtemperatur aus. Genauso gut kann die absolute Temperaturmessung auch mit einem Sensorwiderstandselement auf der Membran erfolgen, das beispielsweise aus Poly-Silizium hergestellt ist. In einem Strömungsmesssystem kann die Ansteuerung der entsprechenden Heizer und der Thermoelemente so erfolgen, dass in einem ersten Zustand, wie oben bereits erwähnt, das erste thermische Membransensorelement einen Strömungsparameter in einem ersten Messbereich bestimmt, während das weitere thermische Membransensorelement bzw. das zweite thermische Membransensorelement eine dynamische Temperaturmessung der Fluidtemperatur vornimmt.

In einem zweiten Zustand kann die Ansteuerungseinrichtung bzw. die Regeleinrichtung das erste thermische Membransensorelement 12 und das zweite thermische Membransensorelement 12' so ansteuern, dass nun das erste thermische 12 Membransensorelement eine dynamische Temperaturmessung des Fluides vornimmt und dabei z.B. der Heizer 3 nicht in Betrieb ist und das zweite thermische Membransensorelement 12' in einem zweiten Messbereich, der sich von dem Messbereich des ersten thermischen Membransensorelements unterscheidet, einen Strömungsparameter des Fluides bestimmt.

In einigen Ausführungsbeispielen der vorliegenden Erfindung kann in dem Chiprahmen bzw. in dem Siliziumrahmen oder dem Bulk-Gebiet ein Temperatursensor 35 integriert oder angeordnet sein, der ausgebildet ist, die Absoluttemperatur des Sensorchips bzw. des Siliziumrahmens zu bestimmen. Bei der Temperaturmessung kann es sich also um eine statische Temperaturmessung handeln. Der Temperatursensor kann beispielsweise eine in dem Siliziumrahmen integrierte Diode 35 sein.

Der Strömungssensor 10 mit dem Sensorchips 5 kann so ausgebildet sein, dass der Sensorchip beim Betrieb des Strömungssensors als freistehender Sensorfinger von dem Fluid umströmt wird. Dazu kann die Oberfläche des Sensorchips, wie im Zusammenhang mit der Fig. 6C beschrieben ist, durch eine entsprechende Passivierung so ausgebildet sein, dass das Fluid, beispielsweise eine Flüssigkeit, keine Kurzschlüsse oder sonstige Beschädigungen an dem Sensorchip bewirken kann.

Wie in der Fig. 9a ferner dargestellt ist, kann der Sensorchip 5 in weiteren Ausführungsbeispielen zusätzlich einen sogenannten Kondensatheizer 30 aufweisen. In dem Ausführungsbeispiel in Fig. 9a besteht der Kondensatheizer aus zwei in Reihe verschalteter in dem Siliziumrahmen des Sensorchips dotierter Widerstände. Diese können symmetrisch zu einer Strömungsrichtung des Fluides vor und nach den beiden thermischen Membransensorelementen 12, 12' angeordnet sein. Der Kondensatheizer 30 kann also symmetrisch vor und hinter der Sensormembran 9 angeordnet sein, um starke thermische Gradienten auf dem Sensorchip zu vermeiden. Mit dem Kondensatheizer kann der Sensorchip 5 auf eine Temperatur oberhalb einer Kondensationstemperatur eines in einem gasförmigen Fluid enthaltenen kondensierbaren Gases erwärmt werden. Beispielsweise kann mit Hilfe des Kondensatheizers 30 der Sensorchip auf eine Temperatur oberhalb einer Taupunkttemperatur eines feuchten, also Wasserdampf aufweisenden Gases, erwärmt und auf dieser Temperatur gehalten werden. Dadurch kann eine Kondensation des in dem Fluid kondensierbaren Stoffes auf dem Sensorchip vermieden werden und somit eine Fehlfunktion des Sensorchips aufgrund von Kondensatbildung verhindert werden.

Als Kondensationstemperatur bezeichnet man die Temperatur, ab der ein Stoff bei einem gegebenen Druck kondensiert, d.h. vom gasförmigen in den flüssigen Aggregatszustand übergeht. Die Kondensationstemperatur ist stoffspezifisch und zudem abhängig vom Druck, wobei man Druck- und Temperaturbedingungen zusammen als Kondensationspunkt bezeichnet.

Gemäß einer anderen Vorgehensweise kann der Sensorchip bei einer bereits erfolgten Tröpfchenbedeckung der Messmembran, beispielsweise durch Aerosolbildung u.a., kurzzeitig mit hoher Energie durch den Kondensatheizer 30 geheizt werden, um das Aerosol wieder zu verdampfen. Im Falle eines Wasserdampf aufweisenden Gases kann also bei einer Tröpfchen- oder Aerosolbildung auf dem Sensorchip das Wasser mit Hilfe des Kondensatheizers 30 wieder sehr schnell verdampft werden, so dass durch den Sensorchip wieder korrekte Strömungsparameter bestimmt werden können. Als Taupunkttemperatur wird dabei die Temperatur bezeichnet, bei der sich auf einem Gegenstand bei vorhandener Feuchte ein Gleichgewichtszustand an kondensierenden und verdunstendem Wasser einstellt, also mit anderen Worten eine Kondensatbildung gerade einsetzt. Der Heizer 3 auf dem thermischen Membransensorelement kann im Gegensatz zu dem Kondensatheizer 30 eine Heizleistung aufweisen, die nicht ausreicht um ein Kondensat auf den zu verdampfen. Beispielsweise kann der Membranheizer 3 eine Heizleistung von 8 mW aufweisen, während der Kondensatheizer z.B. eine Heizleistung von mehr als 100 mW aufweist.

Der Kondensatheizer 30 kann also beispielsweise als integrierter Kondensatheizer in dem Sensorchip, also z.B. dem Siliziumrahmen, angeordnet sein oder auch als separates Heizelement auf dem Sensorchip ausgebildet sein. Falls der Sensorchip, wie in der Fig. 9a dargestellt ist, als dotierter Widerstand im Silizium integriert ist, können diese dotierten Widerstandsstrukturen vorteilhafterweise im gleichen Prozessschritt wie die Temperaturdiode 35 erzeugt werden.

In einigen Ausführungsbeispielen weist der Heizwiderstand 3 einen elektrischen Widerstand kleiner 500 Ohm, 100 Ohm oder 50 Ohm auf. Wenn der Heizwiderstand beispielsweise unter 100 Ohm liegt, kann dann bereits mit geringen Betriebsspannungen von beispielsweise 3,3 V bis 6 V eine ausreichende Energiemenge zum schnellen Aufheizen des Sensorchips und damit zum Verdampfen eines Kondensats auf dem Sensorchip zur Verfügung gestellt werden. Damit sind batteriebetriebene Anwendungen möglich.

Der Kondensatheizer 30 kann ausgebildet sein, um den Sensorchip 5 bzw. das eine oder die mehreren thermischen Membransensorelemente 12, 12' über eine Temperatur zu erwärmen, die in einem messtechnisch sicheren Bereich oberhalb der Taupunkttemperatur des zu untersuchenden Fluides liegt, beispielsweise 5K, 10K oder 50K oberhalb der Taupunkttemperatur.

Der Kondensatheizer 30 kann gemäß einigen Ausführungsbeispielen eine Heizleistung größer 50 mW, 100 mW oder 500 mW aufweisen. Beispielsweise kann der Kondensatheizer eine Herzleistung zwischen 50 mW und 500 mW, oder zwischen 80 mW und 200 mW aufweisen.

Der Kondensatheizer 30 kann ausgebildet sein, den Sensorchip auf eine Temperatur größer 50°C, 130°C, 150°C oder 180°C zu erwärmen. Der Kondensatheizer 30, der ausgebildet ist, um eine Kondensation eines in dem Fluid enthaltenen kondensierbaren Stoffes zu verhindern und/oder ein solches Kondensat von dem Sensorchip zu entfernen bzw. zu verdampfen, weist eine größere bzw. stärkere Heizleistung auf als der Heizer 3, der auf den einen oder den mehreren thermischen Membransensorelementen 12, 12' angeordnet ist und der dazu verwendet wird, um einen Strömungsparameter des Fluides zu bestimmen.

Die Aufgabe des Kondensatheizers, der eine im Vergleich zu den Heizern 3 auf dem thermischen Sensorelement stärkere Heizleistung aufweist, ist es zum einen, eine Kondensatbildung zu verhindern und/oder im Falle einer Kondensatbildung das Kondensat durch Verdampfen, beispielsweise innerhalb von einem Zeitraum von 5s oder 10s, zu entfernen. Gemäß einiger Ausführungsbeispiele kann der Heizer 3 eines Sensorelements, zum Beispiel des thermischen Membransensorelements 12 ausgebildet sein, um eine Heizleistung kleiner 50 mW, 10 mW oder 1 mW aufzubringen, und der Kondensatheizer 30 kann ausgebildet sein, eine Heizleistung größer 50 mW, 100 mW oder 500 mW zur Verfügung zu stellen.

Der Kondensatheizer 30 kann in einigen Ausführungsbeispielen eine fünffach-, zehnfachoder fünfzigfach höhere maximale Heizleistung aufweisen als ein Heizer 3, 3' eines auf dem Sensorchip angebrachten Sensorelements 12, 12', wobei dieser Heizer ausgebildet sein kann, um einen Strömungsparameter des Fluides zu bestimmen oder diese Bestimmung zu ermöglichen. Der Kondensatheizer kann bezüglich seiner Heizleistung so dimensioniert sein, dass er den Sensorchip oberhalb einer Kondensationstemperatur des in dem Fluid enthaltenen Stoffes erwärmen kann und/oder anderseits um ein schnelles Verdampfen eines auf dem Sensorchip bzw. dem Sensorelement des Sensorchips befindlichen Kondensats zu ermöglichen.

Das Erwärmen eines Sensorchips 5 mittels eines auf dem Sensorchip angeordneten Kondensatheizers 30 über eine Kondensationstemperatur eines in dem Gas enthaltenen kondensierbaren Stoffes, um eine Kondensatbildung des Stoffes auf dem Sensorchip zu verhindern, kann so durchgeführt werden, dass der Sensorchip auf eine Temperatur zwischen 1K und 50K oder zwischen 5K und 30K über der Kondensationstemperatur des in dem Gas enthaltenen kondensierbaren Stoffes erwärmt wird.

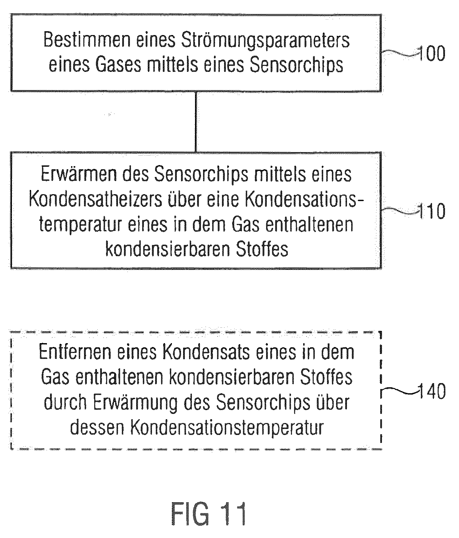

In Ausführungsbeispielen der vorliegenden Erfindung (Fig. 11) kann also ein Verfahren zur Bestimmung eines Strömungsparameters eines Gases so durchgeführt werden, dass vor/während oder nach dem Schritt des Bestimmens 100 des Strömungsparameters des Gases mittels eines auf dem Sensorchip angeordneten Sensorelements, z.B. dem thermischen Membransensorelement, ein Erwärmen 110 des Sensorchips mittels eines auf dem Sensorchip angeordneten Kondensatheizers 30 über eine Kondensationstemperatur eines in dem Gas enthaltenen kondensierbaren Stoffes durchgeführt wird, um so eine Kondensatbildung des Stoffes auf dem Sensorchip zu verhindern.

Gemäß weiterer Ausführungsbeispiele der vorliegenden Erfindung kann das Verfahren zur Bestimmung eines Strömungsparameters eines Fluides, z.B. eines Gases, so durchgeführt werden, dass ein Strömungsparameter des Gases mittels eines thermischen Sensorelements 12, welches einen Heizer 3 aufweist, bestimmt wird und zeitlich davor, während dieser Bestimmung oder danach, ein Erwärmen 110 des Sensorchips mittels eines auf dem Sensorchip angeordneten Kondensatheizers 30 über eine Kondensationstemperatur eines in dem Gas enthaltenen kondensierbaren Stoffes erfolgt, um so eine Kondensatbildung des Stoffes auf dem Sensorchip zu verhindern. Gemäß weiterer Ausführungsformen des ertindungsgemäßen Verfahrens kann bei einer bereits erfolgten Kondensation des in dem Fluid enthaltenen kondensierbaren Stoffes ein Schritt des Entfernens 140 des Kondensats von dem Sensorchip durch Erwärmen 110 des Sensorchips über eine Kondensationstemperatur des Stoffes mittels eines auf dem Sensorchip angeordneten Kondensatheizers erfolgen.

Das Strömungsmesssystem bzw. der Strömungssensor kann also auch eine Ansteuer-/Regeleinrichtung 40 (Fig. 10) aufweisen, bei der unabhängig von einer Ansteuerung eines Sensorelements zur Bestimmung eines Strömungsparameters des Fluides, der Kondensatheizer 30 unabhängig davon angesteuert bzw. aufgeheizt werden kann.

Ist ein Sensorchip beispielsweise länglich ausgebildet und das Sensorelement auf dem Sensorchip so angeordnet, dass ein möglichst großer Abstand zur mechanischen Verankerung an einem Messkopf des Strömungssensors besteht, wird zum einen die Strömungsmessung des Fluides möglichst wenig durch die Verbindung zum Rumpf bzw. Messkopf des Sensorfingergehäuses beeinflusst und gleichzeitig kann erreicht werden, dass bei eingeschalteter Kondensatheizung 30 der aktive sensorische Bereich effektiv beheizt werden kann.

Die Kondensatheizung 30 ist besonders vorteilhaft wenn sie, wie in einigen Ausführungsbeispielen, in einen Sensorchip aus Silizium integriert ist, da Silizium eine hohe Wärmeleitfähigkeit besitzt und dadurch eine sehr homogene Temperaturverleilung erzielt werden kann. Eine Ausführung als dotierte Widerstände im Silizium unterstützt diesen Effekt besonders gut. Denkbar ist jedoch auch ein Kondensatheizer 30, der als Dünnschichtwiderstand beispielsweise aus Poly-Silizium oder Platin wie auf Glas- oder Keramiksubstraten bei üblichem Heißfilm-Anemometern benutzt wird. Durch die geringe thermische Masse des freistehenden Sensorchips ist eine notwendige Übertemperatur oberhalb einer Kondensationstemperatur eines in dem Fluid enthaltenen kondensierbaren Stoffes mit relativ geringem Energieaufwand erreichbar, bzw. mit weniger Energieaufwand als bei üblichen Heißfilmanemometern, so dass sich diese Messvorrichtung auch gut für einen Batteriebetrieb eignet. Beispielsweise kann ein 1 µl Wassertropfen mit einer Heizleistung von 350 mW in 10 Sekunden verdampft werden.

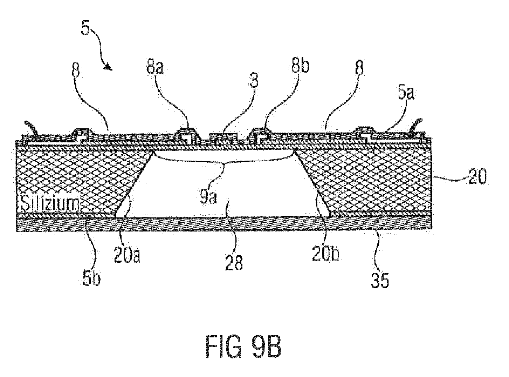

In Fig. 9b ist in einer schematischen Querschnittsdarstellung eines Sensorchips 5, wie er im Zusammenhang mit der Fig. 6C beschrieben wurde, mit einem Verschluss 35 der rückseitigen Ätzgrube 28 unterhalb der Sensormembran 9 dargestellt. Auf einer Rückseite 5b des Sensorchips 5, die den auf der Vorderseite 5a ausgebildeten thermischen Membransensorelementen gegenüberliegt, kann beispielsweise eine Glasplatte 35 angeordnet sein, die die oben erwähnte rückseitige Ätzgrube, Kammer oder Aussparung 28, verschließt. Das heißt, der rückseitige Raum unter der Membran 9 wird von der Wafer-Rückseite her versiegelt. Der Verschluss 35 der rückseitigen Ätzgrube unter der Sensormembran kann beispielsweise durch einen auf Waferlevel gebondeten Glaswafer zum Schutz der Messmembran 9 vor rückseitiger Feuchteanlagerung und um Wirbelbildung im LEE-Gebiet des Sensors zu vermeiden, gebildet werden. Ferner wird als Nebeneffekt die mechanische Stabilität des mit den Ätzgruben 28 perforierten Sensorchips 5 durch den Glasdeckel 35 erhöht.

In anderen Ausführungsbeispielen kann der Glaswafer 35 durch andere Materialien, die sich zur Versiegelung 35 der Aussparung 28 eignen, verwendet werden. Eine Rückseite 9a des auf dem Sensorchip angeordneten thermischen Membransensorelements 12, die einer Vorderseite des Sensorchips, die das Heizelement 3 aufweist, gegenüberliegt, kann so versiegelt sein, dass eine Anlagerung eines Kondensates an der direkten Rückseite 9a des thermischen Membransensorelements 12 verhindert wird.

In weiteren Ausführungsbeispielen kann die Membrankaverne bzw. die Kammer 28, welche durch eine Rückseite 9a der Membran 9, der Versiegelung 35 und den Seitenwänden 20a, 20b der Ätzgrube gebildet wird einen leichten Unterdruck aufweisen. Der Einschluss von leichtem Unterdruck in der Membrankaverne 28 kann dazu dienen, um eine Membrandurchwölbung im Arbeitsbereich des Sensors unter Umgebungsdruck immer in Richtung der Grube gewölbt zu halten. Der Unterdruck in der Membrankaverne bzw. der versiegelten Ätzgrube 28 kann beispielsweise kleiner oder weniger 800 mbar, 500 mbar oder 300 mbar betragen. Das heißt, in der Kammer 28 kann ein Unterdruck von weniger 800 mbar, 500 mbar oder 300 mbar herrschen. Durch den Einschluss des Unterdruckes kann zudem die Sensorempfindlichkeit erhöht werden, da die thermische Masse des Gasvolumens auf der Membranrückseite geringer ist und somit sich auch das nicht zum Messeffekt beitragende parasitäre Signal verringert.

In Fig. 10 ist die schematische Darstellung eines Strömungsmesssystems 99 zur Bestimmung eines Strömungsparameters eines Fluides gemäß einigen Ausführungsbeispielen der vorliegenden Erfindung dargestellt. Das Strömungsmesssystem 99 weist einen Strömungssensor 10 mit einem Sensorchip 5 auf, wobei der Sensorchip 5 ein erstes thermisches Membransensorelement 12 aufweist, das ausgebildet ist, um den Strömungsparameter des Fluides in einem ersten Messbereich zu bestimmen oder um eine Fluidtemperatur zu bestimmen. Das erste thermische Membransensorelement 12 weist ferner zwei zueinander beabstandete Thermoelementübergänge 8a, 8b auf und ein zwischen den Thermoelementübergängen 8a, 8b angeordnetes Heizelement 3. Der Sensorchip 5 ist ausgebildet, um beim Betrieb des Strömungsmesssystems 99 mit dem Strömungsmesser 10 als freistehender Sensorfinger von einem zu untersuchenden Fluid umströmt zu werden. Der Sensorchip 5 weist ferner ein zweites thermisches Membransensorelement 12' auf, das ausgebildet ist, um den Strömungsparameter des Fluides in einem zweiten Messbereich zu bestimmen oder um eine Fluidtemperatur des Fluides zu bestimmen. Das zweite thermische Membransensorelement 12' weist wiederum zwei beabstandete Thermoelementübergänge 8a' und 8b' auf und ein zwischen den Thermoelementübergängen angeordnetes Heizelement 3'. Ein Abstand D1 der zwei Thermoelementübergänge 8a, 8b des ersten thermischen Membransensorelements 12 zu dem dazwischen angeordneten Heizelement 3a ist unterschiedlich zu einem Abstand D2 der zwei Thermoelementübergänge 8a' und 8b' des zweiten thermischen Membransensorelements 12' von dem dazwischen angeordneten Heizelement 3'.

Das Strömungsmesssystem 99 kann ferner eine Ansteuereinrichtung 40 für den Sensorchip 5 aufweisen, wobei die Ansteuereinrichtung 40 die thermischen Membransensorelemente 12, 12' so ansteuern kann, dass in einem ersten Zustand das erste thermische Membransensorelement 12 den Strömungsparameter in dem ersten Messbereich bestimmt und das zweite thermische Membransensorelement 12' die Fluidtemperatur bestimmt. In einem zweiten Zustand bestimmt das erste thermische Membransensorelement 12 die Fluidtemperatur und das zweite thermische Membransensorelement 12' den Strömungsparameter in einem zweiten Messbereich.

Zusätzlich kann der Sensorchip 5, wie oben beschrieben, einen Kondensatheizer 30 sowie einen Temperatursensor 35, z.B. eine Diode, aufweisen. Diese können ebenfalls von der Ansteuereinrichtung bzw. Regeleinrichtung 40 so angesteuert werden, dass eine absolute Fluidtemperatur bestimmbar ist und/oder dass der Sensorchip, wie oben beschrieben, über eine Kondensationstemperatur eines in dem Fluid enthaltenen kondensierbaren Stoffes hält oder falls eine solche Kondensation bereits eingetreten ist, das entsprechende Kondensat durch Erwärmen des Sensorchips verdampft bzw. entfernt.

In der Ansteuer/Regeleinrichtung 40 oder als eine separate Einrichtung kann ferner eine Auswerteeinrichtung ausgebildet sein, die basierend auf dem von dem Sensorchip und beispielsweise einem externen Druckmesssensor 45 ermittelten Druckwert mit Hilfe der realen Gasgleichung einen Massendurchfluss bzw. Volumendurchfluss bestimmen kann.

In Ausführungsbeispielen der vorliegenden Erfindung kann das Fluid ein Wasserdampf aufweisendes Gas sein und die Kondensationstemperatur kann dementsprechend der Taupunktstemperatur von Wasser entsprechen. In einigen Ausführungsbeispielen der vorliegenden Erfindung kann der Sensorchip ein Sensorelement, z.B. ein thermisches Membransensorelement aufweisen und außerdem zumindest ein weiteres Sensorelement oder Membransensorelement, das ausgebildet ist, um lediglich eine Fluidtemperatur zu bestimmen. Dieses weitere Sensorelement kann beispielsweise keinen Strömungsparameter in einem zweiten Messbereich bestimmen, aber dafür einen Temperatursensor oder einen Thermoelementübergang aufweisen zur Bestimmung einer Fluidtemperatur. Das heißt, in einigen Ausführungsbeispielen kann das zweite Sensorelement auf dem Sensorchip lediglich zur Bestimmung einer Fluidtemperatur, z.B. einer relativen Fluidtemperatur oder aber auch einer absoluten Fluidtemperatur verwendet werden.

Die Ansteuereinrichtung 40 kann beispielsweise ausgebildet sein, den Sensorchip eines Strömungssensors, so anzusteuern, dass ein thermisches Membransensorelement 12 in einem ersten Zustand den Strömungsparameter in dem Messbereich des thermischen Membransensorelements 12 bestimmt und dass in einem zweiten Zustand das thermische Membransensorelement 12 die Fluidtemperatur des den Sensor umströmenden Fluides bestimmt. In dieser Ausführungsform kann also die Messung von Fluidtemperatur und Bestimmung des Strömungsparameters zeitlich sequenziell hintereinander von einem einzelnen thermischen Membransensorelement erfolgen. Der Sensorchip ist wie oben bereits beschrieben, im Betrieb als freistehender Nacktchip von dem zu untersuchenden Fluid umströmt.

Der Sensorchip 5 des Strömungssensors kann ferner so betrieben werden, dass eine Kondensatbildung eines aus dem Fluid kondensierbaren Stoffes auf dem Sensorchip detektiert wird. Dies kann beispielsweise auch während des Schrittes des Bestimmens eines Strömungsparameters mit Hilfe des thermischen Membransensorelements durch Anlegen eines zeitlich veränderbaren elektrischen Signals an den Heizer 3 und anschließendem Vergleichen des durch die Temperatursensoren 8, 8' gemessenen Antwortsignals mit einem zu erwartenden gemessenen Antwortsignal ohne Kondensatbildung auf dem thermischen Membransensorelement 12 erfolgen.

Das heißt, der Strömungssensor 10 mit dem Sensorchip 5 kann gemäß Ausrührungsbeispielen der vorliegenden Erfindung auch zur Detektion von Feuchte auf den Sensorchip verwendet werden. Dies kann beispielsweise durch das Anlegen eines zeitlich veränderbaren elektrischen Signals an den Heizer 3 durch die Ansteuereinrichtung 40 erfolgen. Bei den zeitlich veränderbaren elektrischen Signalen kann es sich beispielsweise um Rechteckoder Sinussignale handeln. Zur Detektion von kritischer Feuchte kann auch während der Strömungsmessung der Heizer 3 hin und wieder mit einem sich zeitlich veränderten Signal, wie z.B. einem Rechteck- oder Sinussignal so moduliert werden, um über die Verformung eines Antwortsignals an den Thermopiles 7, 7' die Gegenwart eines Kondensators wie z.B. Wasser oder Verunreinigungen zu detektieren.

Eine Ansteuerung des Kondensatheizers 30 durch die Ansteuereinrichtung 40 kann beispielsweise so durchgeführt werden, dass ein auf der Messmembran befindlicher Wassertropfen das Thermopilesignal in unzulässiger Weise einbrechen lässt und deshalb der Kondensatheizer 30 mit voller Leistung betrieben wird, um den Wassertropfen bzw. das Kondensat schnell zu entfernen und über die Thermopiles 7, 7' bzw. über die Thermolemente 8, 8' der beiden Membranen zu detektieren, ob der Tropfen verdampft ist. Das Gerät kann während des Vorgangs des Bestimmens eines Strömungsparameters durch Anlegen eines zeitlich veränderbaren elektrischen Signals an den Heizer und Vergleichen des Antwortsignals mit einem erwartenden Antwortsignal eine Kondensatbildung detektieren.

In Ausführungsbeispielen der vorliegenden Erfindung kann ein Strömungssensor einen Sensorchip 5 aufweisen, wobei der zur Strömungsmessung benötigte Teil des Sensorchips 5 im direkten Kontakt zum Medium bzw. Fluid ist. Insbesondere ist bei einigen Ausführungsbeispielen der vorliegenden Erfindung in der Nähe der Sensormembran kein Gehäuseteil oder eine sonstige Vorrichtung vorhanden, die eine Anlagerung eines Kondensators, wie z.B. von Wassertröpfchen, z.B. aufgrund von Kapillarkräften, begünstigt. Das heißt, man kann diese Anordnung als freistehenden Nacktchip in einem Fluidmesskanal bezeichnen. In einigen Ausführungsbeispielen der vorliegenden Erfindung kann neben der thermischen Sensormembran zur Strömungsmessung der Sensorchip eine oder mehrere weitere Membranen besitzen, die zur dynamischen Temperaturmessung beispielsweise eines Atemgases in der Medizintechnik und zur Detektion von Feuchte verwendet werden.

Gemäß einiger Ausführungsbeispiele der vorliegenden Erfindung kann der Sensorchip auch einen Kondensatheizer aufweisen bzw. kann dieser in den Sensorchip integriert sein. Mit Hilfe des Kondensatheizers kann die notwendige Wärmemenge eingetragen werden, um ein auf dem Sensorchip vorhandenes Kondensat, wie z.B. Wasser, kurzzeitig zu verdampfen oder den gesamten Sensorchip auf eine Temperatur oberhalb einer Kondensationstemperatur, z.B. für Wasser oberhalb einer Taupunkttemperatur, zu erwärmen.

In einigen Ausführungsbeispielen der vorliegenden Erfindung kann ferner eine zur Temperaturmessung benutzte im Silizium strukturierte Diode ausgebildet sein, die zusammen mit einer dynamischen Temperaturmessung, die mittels eines weiteren thermischen Memhransensorelements durchgeführt wird, die Bestimmung einer Fluidtemperatur, also z.B. eine Gastemperatur ermöglicht.

Aus dem Massestrom, der Gastemperatur und dem Gasdruck, welcher beispielsweise über einen externen Drucksensor 45 bestimmt werden kann, kann aufgrund der zeitlich genauen Messung über die Realgasgleichung ein Volumenstrom berechnet werden.

Gemäß einiger Ausführungsbeispiele kann sich das erfindungsgemäße Verfahren bezüglich der Strömungsmessung am bekannten kalorimetrischen Messprinzip, mit dem ein Massestrom bestimmt werden kann, orientieren. Im einfachsten Fall kann dabei die Heizstruktur 3 auf das Sensormembran 9 mit konstanter Spannung oder mit konstanter Leistung betrieben werden. Ausgewertet wird die sich durch die Strömung leicht verschobene Temperaturverteilung über der Membran, die mit den Thermopiles 7, 7' vor und nach dem Heizer 3 gemessen wird. Die Thermopiles 7, 7' liefern dabei eine Differenzspannung, die proportional zur Temperaturdifferenz zwischen Sensormembran und Siliziumrahmen ist.

Die resultierende Kennlinie, also die Differenz beider Thermopilespannung in Abhängigkeit des Massestroms ist nichtlinear und besitzt die höchste Empfindlichkeit bei geringer Strömung. Die Zuordnung eines Massenstromwertes zu einer bestimmten Thermopilespannung erfolgt üblicherweise durch Kalibrieren. Der Vorteil der Differenzmessung (Differenz zwischen Thermopilesignal vor und nach der Heizstruktur) besteht nun ähnlich wie bei einer Brückenschaltung darin, dass die Messgröße vom Offset befreit und bei korrektem Nullabgleich durch Vorzeichenwechsel auch eine Strömungsrichtung des Fluides angezeigt werden kann. Differenzschaltungen sind robust gegenüber Störsignalen, da parasitäre Effekte in der Regel beide Thermopiles gleich beeinflusst (Gleichtaktunterdrückung).

In Ausführungsbeispielen der vorliegenden Erfindung kann die Ermittlung der absoluten Gastemperatur bzw. Fluidtemperatur, durch Addition der mit dem Temperatursensor, wie z.B. der Temperaturdiode 35 gemessenen Absoluttemperatur des Sensorchips 5 bzw. Siliziumrahmens und der dynamischen Temperaturdifferenz zwischen dem zweiten nicht beheizten thermischen Membransensorelement und dem Siliziumrahmen erfolgen.

Die Temperaturspannungskennlinien der Diode und der Thermopiles sollten dazu bekannt sein. Aus vom Membransensor bzw. dem thermischen Membransensorelement ermitteltem Massestrom wird unter Verwendung der Realgasgleichung das korrekte Gasvolumen bzw. der Volumenstrom ermittelt. In diese Rechnung fließt neben der Gastemperatur auch der Gasdruck ein, der aus einem zusätzlichen barometrischen und gegebenenfalls einem Differenzdrucksensor 45 gewonnen wird. Dieser kann auf dem Sensorchip integriert werden oder es kann sich um einen externen Druckmesser handeln.

Gemäß weiterer Ausführungsbeispiele der vorliegenden Erfindung weist der Sensorchip 5 den Kondensatheizer 30 auf, mit dem der Sensorchip 5 im einfachsten Fall auf einer Konstanten oberhalb einer Kondensationstemperatur eines in dem Fluid enthaltenen kondensicrbaren Stoffes gehalten wird, die in allen Betriebsfällen sicher über den Kondensationspunkt bzw. im Fall von im Gas enthaltenen Wasserdampf über dem Taupunkt liegt. Auf diese Übertemperatur wird das Massestromsignal kalibriert. Für einen tragbaren Einsatz, bei dem es auf einen geringen Energieverbrauch ankommt, kann der Kondensatheizer je nach Einsatzbedingungen auf die jeweilige Temperatur kurz oberhalb einer Kondensationstemperatur erwärmt werden, also z.B. in einem Temperaturbereich von 1K bis 20K oberhalb des Kondensationspunktes bzw. Taupunktes.

Dazu ist es notwendig, den Einfluss der Chiptemperatur auf das Kennlinienfeld zu kennen und diesen als weiteren Parameter in der Kontrollelektronik bzw. der Auswerte- und Regeleinrichtung zu hinterlegen.

Die Unterschreitung des Taupunktes kann mit Hilfe von Rechtecksignalen auf dem Heizer und der Auswertung des typischen Signalanstiegsverhalten der Thermopilespannung erfolgen. Dies ist beispielsweise in der Patentschrift DE 10 113 190 beschrieben.

Dazu wird die nicht beheizte Temperaturmessmembran benutzt und in größeren zeitlichen Abständen mit den notwendigen Signalformen beaufschlagt.

Lässt ein auf der Messmembran angelagerter Wassertropfen das Signal unzulässig einbrechen, so wird gemäß einiger Ausführungsbeispiele eine volle Heizleistung des Kondensatheizers eingestellt und über die Thermopiles der beiden thermischen Membransensorelemente detektiert, ob der Tropfen verdampft ist. Das Gerät kann in dieser Zeit nach außen die Zustandsmeldung über nicht korrekte Strömungsmesswerte abgeben.

Gemäß weiterer Ausführungsbeispiele der vorliegenden Erfindung kann der Strömungssensor auch zur Detektion von kritischer Feuchte verwendet werden, wobei während der Strömungsmessung der Heizer 3 hin und wieder mit einem sich zeitlich veränderten Signal, z.B. einem Rechteck oder Sinussignal moduliert wird, um über die Verformung eines Antwortsignals an dem Thermopile die Gegenwart von Wasser oder Verunreinigungen zu detektieren.

In einigen Ausführungsbeispielen der vorliegenden Erfindung ist eine Messvorrichtung in Form von Eintauchfühler und dem oben beschriebenen MEMS-Sensorchip, der als "Nacktchip" ausgebildet ist, dargestellt. In Ausführungsbeispielen der vorliegenden Erfindung kann ein Strömungssensor bzw. ein Sensorchip dazu verwendet werden, eine Volumenstrommessung feuchter Gase mit Hilfe zumindest einer, zwei oder mehrerer thermischer Membransensorelemente, einem Thermometer, z.B. der Diode 35, sowie einer passiven Membran, die nicht geheizt wird und mittels einem Ansteuerungsmanöver eines Kondensatheizers 30 zur Verhinderung von Kondensatbildung durchzuführen. Ferner kann der Strömungssensor zur Beherrschung der Tröpfchenablagerung auf dem Sensorchip verwendet werden.

Gemäß einiger Ausführungsbeispiele der vorliegenden Erfindung wird vorteilhafterweise eine wesentliche Reduzierung der thermischen Sensormasse erzielt. So kann nämlich die Membrandicke eines Sensorelements, z.B. eines thermischen Membransensorelementes beispielsweise nur 1µm bis 5µm, also z.B. 2µm betragen.

Die resultierende Membran kann also in einigen Ausführungsbeispielen der vorliegenden eine sehr geringe thermische Masse aufweisen. Dadurch wird eine gegenüber konventionellen Sensoren enorm verringerte bzw. geringe Heizleistung für den Messbetrieb des Membransensorelementes benötigt. Die Heizleistung eines Heizers 3 für einen Messbetrieb des Strömungssensors kann beispielsweise zwischen 1 mW und 50 mW liegen, also z.B. bei 30mW oder bei 5mW. Ferner kann durch die geringe thermische Masse der Membran eine schnelle Ansprechzeit des Sensors von beispielsweise 0.1ms bis 5ms, also z.B. von 1ms erzielt werden. Vorteilhafterweise kann auch eine höhere Sensorempfindlichkeit von beispielsweise 2mV/mW bis 30mV/mW, also z.B. von 16mV/mW erreicht werden. Durch die oben genannten Vorteile kann ein Batteriebetrieb des Strömungssensors, sowie ein Einsatz des Sensors für tragbare Anwendungen und letztendlich eine Energieverbrauchs- und Gewichtsreduzierung ermöglicht werden.

Der Sensorchip kann gemäß einiger Ausführungsbeispiele als Mikro-ElektroMechanischer (MEMS-) Chip mit einem dementsprechend hohen Integrationsgrad ausgebildet sein. Der Sensorchip mit dem entsprechenden Heizer kann also mittels Mikrosystemtechnik hergestellt werden. Mit dem Sensorfinger bzw. Sensorchip können in Ausführungsbeispielen der vorliegenden Erfindung Strömungsmengen, Strömungsrichtungen und eine Fluid- bzw. Medien-Temperatur hochdynamisch gemessen werden. Der Sensorchip kann mehr als ein Membransensorelement, also z.B. zwei thermische Membransensorelemente aufweisen. So kann durch ein entsprechendes Ansteuern bzw. durch ein entsprechendes Manöver, beispielsweise auf der zweiten Membran, eine oder mehrere zusätzliche Zustands- bzw. stoffspezifische Größen des Mediums bzw. des Fluides abgleitet werden. So kann, gemäß einigen Ausführungsbeispielen beispielsweise eine Feuchte oder eine Zusammensetzung des Fluides bestimmt werden.

Zudem ist in einigen Ausführungsbeispielen der vorliegenden Erfindung eine gezielte Temperierung des Sensors bzw. Sensorchips mittels eines in oder auf dem Sensorchip angeordneten Kondensatheizers 30 möglich. Dies ermöglicht vorteilhafterweise Messungen bzw. eine Bestimmung eines Strömungsparameters des Fluides unter kondensierenden Bedingungen durch Temperierung des Sensorchips auf Temperaturen oberhalb eines Kondensationspunktes eines in dem Fluid enthaltenen kondensierbaren Stoffes, also bei Wasser oberhalb des Taupunktes. Ferner kann mittels des Kondensatheizers auch ein Kondensat bzw. Tröpfchen auf dem Sensorchip durch kurzzeitiges Ausheizen beseitigt werden.

Es sollte ferner darauf hingewiesen werden, dass alle gegenständlichen Merkmale der vorliegenden Anmeldung auch als Verfahrensschritte in den entsprechenden erfindungsgemäßen Verfahren umgesetzt werden können.

Zusammenfassend ist im Übrigen festzuhalten, dass einige Ausführungsbeispiele gemäß der Erfindung eine Vorrichtung und ein Verfahren zur Messung sich dynamisch ändernder und mit Wasser gesättigter Luftströmungen schaffen.

## Patentansprüche

1. Strömungssensor (10) zur Bestimmung eines Strömungsparameters eines Fluides (15), mit folgenden Merkmalen:
einem Sensorchip (5), mit einem thermischen Membransensorelement (12), das ausgebildet ist, um den Strömungsparameter des Fluides (15) in einem Messbereich zu bestimmen oder um eine Fluidtemperatur des Fluides (15) zu bestimmen, wobei das thermische Membransensorelement (12) zwei zueinander beabstandete Thermoelementübergänge (8a, 8b) und ein zwischen den Thermoelementübergängen angeordnetes Heizelement (3) aufweist, und wobei der Sensorchip (5) ausgebildet ist, um beim Betrieb des Strömungssensors als freistehender Sensorfinger von dem Fluid (15) umströmt zu werden; und
einer Ansteuereinrichtung, die ausgelegt ist, um den Heizer (3) während der Strömungsmessung mit einem zeitlich veränderlichen Signal zu modulieren, und um ein Antwortsignal mit einem Antwortsignal ohne Kondensatbildung zu vergleichen, um eine Kondensatbildung eines Stoffes aus dem Fluid auf dem Sensorchip (5) zu detektieren;
wobei der Strömungsparameter eine Strömungsmenge, ein Massendurchfluss, ein Volumendurchfluss, eine Strömungsgeschwindigkeit, eine Strömungsrichtung, eine Fluidtemperatur oder ein Fluidzustandsparameter ist;
wobei die Ansteuereinrichtung ausgelegt ist, um den Strömungssensor während der Strömungsmessung mit einem Sinussignal zu modulieren.

2. Strömungssensor gemäß Anspruch 1, wobei die Ansteuereinrichtung ausgelegt ist, um über eine Verformung des Antwortsignals eine Gegenwart eines Kondensats zu detektieren.

3. Verfahren zur Bestimmung eines Strömungsparameters eines Fluides, mit folgenden Schritten:
Bestimmen (100) eines Strömungsparameters in einem Messbereich oder einer Fluidtemperatur des Fluides mittels eines an einem Messkopf freistehend befestigten Sensorchips (5) mit einem thermischen Membransensorelement (12), wobei das thermische Membransensorelement (12) zwei beabstandete Thermoelementübergänge und ein zwischen den Thermoelementübergängen angeordnetes Heizelement (3) aufweist, und wobei der Sensorchip während der Messung des Strömungsparameters freistehend in dem Fluid angeordnet wird; und
Detektieren einer Kondensatbildung eines Stoffes aus dem Fluid auf dem Sensorchip (5) während des Bestimmens (100) eines Strömungsparameters in einem Messbereich, wobei das Detektieren ein Anlegen eines zeitlich veränderbaren elektrischen Signals an den Heizer und ein Vergleichen des Antwortsignales mit einem Antwortsignal ohne Kondensatbildung umfasst,
wobei der Strömungssensor während der Strömungsmessung mit einem Sinussignal moduliert wird;
wobei der Strömungsparameter eine Strömungsmenge, ein Massendurchfluss, ein Volumendurchfluss, eine Strömungsgeschwindigkeit, eine Strömungsrichtung, eine Fluidtemperatur oder ein Fluidzustandsparameter ist.

## Claims

1. Flow sensor (10) for determining a flow parameter of a fluid (15), comprising:
a sensor chip (5) having a thermal membrane sensor element (12) that is configured to determine the flow parameter of the fluid (15) in a measurement range or to determine a fluid temperature of the fluid (15), the thermal membrane sensor element (12) comprising two spaced-apart thermoelement junctions (8a, 8b) and a heating element (3) arranged between the thermoelement junctions, and the sensor chip (5) being implemented to be circumflowed by the fluid (15) during operation of the flow sensor as a self-supporting sensor finger; and
control means configured to modulate the heater (3) with a time-variable signal during flow measurement and to compare a response signal to a response signal without condensate formation so as to detect a condensate formation of a substance from the fluid on the sensor chip (5);
wherein the flow parameter is a flow quantity, a mass flow, a volume flow, a flow velocity, a flow direction, a fluid temperature or a fluid state parameter;
the control means being configured to modulate the flow sensor with a sinusoidal signal during flow measurement.

2. Flow sensor according to claim 1, wherein the control means is configured to detect a presence of a condensate via a deformation of the response signal.

3. Method for determining a flow parameter of a fluid, comprising:
determining (100) a flow parameter in a measurement range or a fluid temperature of the fluid by means of a sensor chip (5) having a thermal membrane sensor element (12) mounted on a measurement head in a self-supporting manner, wherein the thermal membrane sensor element (12) comprises two spaced-apart thermoelement junctions and a heating element (3) arranged between the thermoelement junctions, and wherein the sensor chip is arranged in a self-supporting manner in the fluid during the measurement of the flow parameter; and
detecting a condensate formation of a substance from the fluid on the sensor chip (5) during determining (100) a flow parameter in a measurement range, said detecting comprising applying a time-variable electric signal to the heater and comparing the response signal to a response signal without condensate formation,
wherein the flow parameter is modulated with a sinusoidal signal during flow measurement.
wherein the flow parameter is a flow quantity, a mass flow, a volume flow, a flow velocity, a flow direction, a fluid temperature or a fluid state parameter.

## Revendications

1. Capteur d'écoulement (10) pour déterminer un paramètre d'écoulement d'un fluide (15), aux caractéristiques suivantes:
une puce de détection (5), avec un élément de détection à membrane thermique (12) qui est conçu pour déterminer le paramètre d'écoulement du fluide (15) dans une zone de mesure ou pour déterminer une température du fluide (15), l'élément de détection à membrane thermique (12) présentant deux transitions de thermocouple (8a, 8b) distantes l'une de l'autre et un élément chauffant (3) disposé entre les transitions de thermocouple, et dans lequel la puce de détection (5) est conçue pour être entourée, pendant le fonctionnement du capteur d'écoulement, comme doigt de capteur autonome par le fluide (15); et
un moyen d'activation qui est conçu pour moduler l'élément chauffant (3) pendant la mesure de l'écoulement par un signal variable dans le temps et pour comparer un signal de réponse à un signal de réponse sans condensation, pour détecter une condensation d'une substance du fluide sur la puce de détection (5);
dans lequel le paramètre d'écoulement est une quantité d'écoulement, un débit massique, un débit volumique, une vitesse d'écoulement, une direction d'écoulement, une température de fluide ou un paramètre d'état de fluide;
dans lequel le moyen d'activation est conçu pour moduler le capteur d'écoulement pendant la mesure d'écoulement par un signal sinusoïdal.

2. Capteur d'écoulement selon la revendication 1, dans lequel le moyen d'activation est conçu pour détecter par une déformation du signal de réponse une présence d'un condensant.

3. Procédé pour déterminer un paramètre d'écoulement d'un fluide, aux étapes suivantes consistant à:
déterminer (100) un paramètre d'écoulement dans une zone de mesure ou une température du fluide au moyen d'une puce de détection (5), fixée de manière libre sur une tête de mesure, avec un élément de détection à membrane thermique (12), l'élément de détection à membrane thermique (12) présentant deux transitions de thermocouple distantes l'une de l'autre et un élément chauffant (3) disposé entre les transitions de thermocouple, la puce de détection étant disposée, pendant la mesure du paramètre d'écoulement, de manière libre dans le fluide; et
détecter une condensation d'une substance du fluide sur la puce de détection (5) pendant la détermination (100) d'un paramètre d'écoulement dans une zone de mesure, la détection comportant le fait d'appliquer un signal électrique variable dans le temps à l'élément chauffant et de comparer le signal de réponse avec un signal de réponse sans condensation,
dans lequel le capteur de détection est modulé, pendant la mesure d'écoulement, par un signal sinusoïdal;
dans lequel le paramètre d'écoulement est une quantité d'écoulement, un débit massique, un débit volumique, une vitesse d'écoulement, une direction d'écoulement, une température de fluide ou un paramètre d'état de fluide.
